# EUROPEAN PATENT APPLICATION

(11) **EP 1 793 133 A1**
(43) Date of publication of application: **06.06.2007**
(21) Application number: 05772783.6
(22) Date of filing: 18.08.2005
(51) Int. Cl.: F16C 11/04, F16C 11/10, H04M 1/02

(54) **ROTATION SUPPORT MECHANISM AND PORTABLE TERMINAL**

(30) Priority: 19.08.2004 JP 2004239184
(71) Applicant: OMRON CORPORATION, Kyoto-shi, Kyoto 600-8530 (JP)
(72) Inventor: TAKAMORI, Satoshi, c/o OMRON Corporation, Shimogyo-ku, Kyoto-shi, Kyoto 6008530 (JP); UCHIDA, Tsuyoshi, c/o OMRON Corporation, Shimogyo-ku, Kyoto-shi, Kyoto 6008530 (JP); NISHIDA, Masami, Osaka-shi, Osaka 5320031 (JP)
(74) Representative: Weihs, Bruno Konrad
(86) International application number: PCT/JP2005/015080
(87) International publication number: WO 2006/019141

(57) **Abstract**

A rotation support mechanism and a portable terminal having a rotation support function that allows a cover to semi-automatically open from a closed position to an open position in a horizontal or a vertical position, enabling a user to open the cover to a desired open position by one hand and one-touch operation. The rotation support mechanism allows the cover to rotate from the closed position at which a vertically long body and the cover are closed in a superposed manner to the open position at which the cover is stopped after it is rotated by a certain angle in a plane in which the body and the cover are superposed on each other. The rotation of the cover integral with an eccentric cam can be stopped at rotation positions of multiple stages in the horizontal or the vertical position by a pressing means that presses, in the plane, the cam surface of the eccentric cam.

## Description

### TECHNICAL FIELD

The present invention relates to a rotation support mechanism to be used for an opening and closing support unit of a mobile terminal such as a mobile telephone and an electronic notebook. More particularly, it concerns a rotation support mechanism which has such an efficient opening operation function that, when a main body and a cover superposed longitudinally are open-operated or close-operated, the cover is allowed to be stopped in rotation in a lateral position with a 90-degree rotation in the plane as well as in a longitudinal position with a 180-degree rotation in the plane, based upon a longitudinally elongated main body, by a one-touch process, and a mobile terminal using such a mechanism.

### BACKGROUND ART

The following description will discuss, for example, a rotation support mechanism that supports a cover of a mobile telephone so as to be opened and closed.
In general, in the mobile telephone that incorporates the rotation support mechanism of this type so as to open and close the cover, a middle-bending type rotation support mechanism (cover open/close mechanism) has been known in which: a main body and a cover are opened from a superposed state with the main body and the cover being folded into two parts and superposed on each other, in a superposing direction of the cover onto the main body, with a rotation shaft of a rotation supporting unit serving as an open/close fulcrum (for example, see Patent Document 1).

However, in the case when the cover attached to one side of such a rotation support mechanism is operated to open, the user has to support the main body by one hand, while the cover is held by the other idle hand, and has to carry out the opening operation, with the result that both of the hands are required to open the cover. For this reason, it is difficult to easily open and close the cover.

Patent Document 1: Japanese Patent Application Laid-Open No. 2003-28138

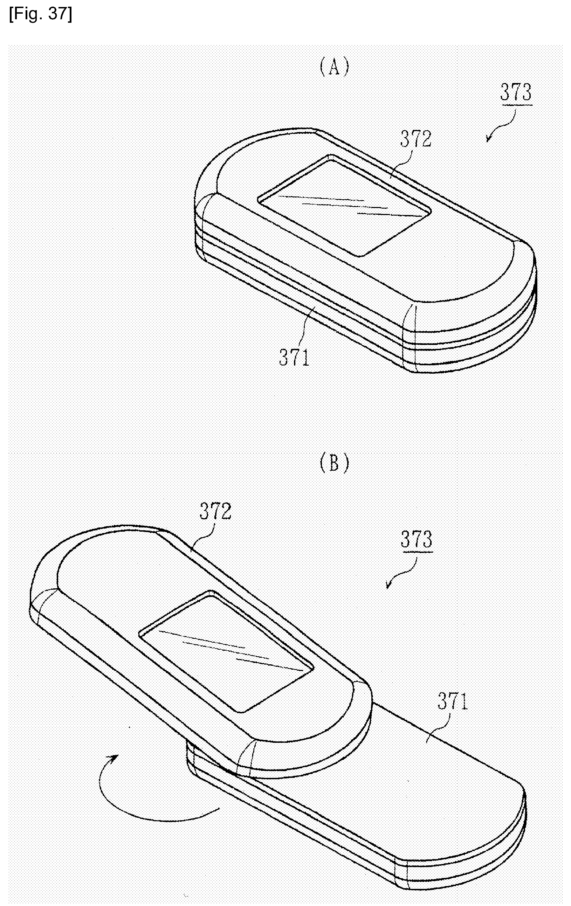

Moreover, in recent years, as shown in Figs. 37(A) and 37(B), a plane open/close type mobile telephone 373 has been known in which, from a superposed state of a main body 371 and a cover 372, the cover 372 on the upper side is operated to open by rotating it in a direction in the plane by nearly 180 degrees in its superposed state as it is.

In this case, from a state in which the mobile telephone is held by one hand, the cover on the upper side of the superposed parts is pushed by the one hand so that the main body and the cover are offset step by step longitudinally; thus, the cover can be easily grabbed and the succeeding cover rotating operation is easily carried out.

### DISCLOSURE OF THE INVENTION

### PROBLEMS TO BE SOLVED BY THE INVENTION

However, in this case also, it is not possible to operate to open the cover by using one hand to the last stage, and both hands are required to completely rotate the cover by 180 degrees to an open position.

Moreover, in the rotation support mechanism that opens and closes the cover in a direction in the plane with the cover being superposed on the upper face of the main body, its structure tends to become bulky since the rotation axis is vertically directed due to the opening and closing structure of the cover, with the result that it becomes difficult to make the mobile telephone thinner.
Moreover, it is necessary to devise the rotation amount and the rotation direction of the cover properly so that upon opening and closing the main body and the cover, it becomes possible to prevent the wiring connecting these from being twisted in the rotation direction, with the result that preventing the wiring from being twisted causes a limitation in achieving a thinner product.

Furthermore, in the case when a display function for allowing not only stationary images, but also motion images such as television images to be outputted to the display device of a mobile telephone to give further entertainments is prepared, it is possible to make the mobile telephone itself laterally oriented to provide a laterally elongated display device suitable for displaying picture images.

However, the mobile telephone is normally designed to have a longitudinally elongated shape so as to be easily carried by one hand. For this reason, in an attempt to set the display device in a lateral orientation to view images, the mobile telephone itself has to be laterally oriented, and the laterally oriented telephone is difficult to carry by one hand, and when the viewing state in the lateral orientation continues for a long time, the hand gets tired and the tiring posture has to be kept for a long time.

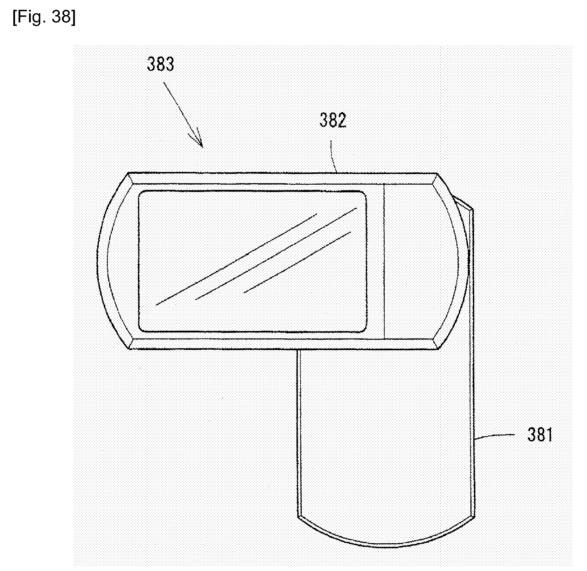

For this reason, as shown in Fig. 38, a mobile telephone 383 has been proposed in which: a main body 381 having a longitudinally elongated shape is set to a longitudinal orientation as a standard position, and the cover 382 on which a display device is mounted is rotated by 90 degrees to be oriented laterally. In this case, since the main body 381 is longitudinally oriented, it is easily carried by one hand, and the cover 382 that is laterally oriented in this state has a laterally elongated shape from which images are easily viewed; thus, this structure is suitable for being carried in the same posture for a long time.

However, in order to open the cover from the closed position with the main body and the cover being closed to the open position with the cover being position-determined so as to be laterally oriented, the supporting structure used for setting the cover of the mobile telephone in the lateral orientation needs to have processes, such as raising the cover to the intermediate open position in the bending direction, bending the cover laterally and further rotating the cover by 90 degrees, with the result that many operation processes are required and time consuming tasks are required until the cover has been laterally oriented, failing to provide an easy method. Moreover, it is not possible to stop the cover at a desired angle (for example, 90 degrees) in the middle of the cover opening or closing operation.

In order to solve these problems, the present invention provides a rotation supporting function that allows the cover to rotate semi-automatically from the closed position to the open position, that is, a lateral position or a longitudinal position, and the objective of the present invention is to provide a rotation support mechanism by which the user is allowed to operate the cover to open to a desired open position by one hand through a one-touch process, and a mobile terminal using such a mechanism.

### MEANS FOR SOLVING THE PROBLEMS

The present invention relates to a rotation support mechanism that allows a cover to rotate in a direction in a plane from a closed position with a longitudinally elongated main body and the cover being superposed on each other in the superposed state as it is, and also allows the cover to be stopped at an open position with a certain rotated angle, and the rotation support mechanism is provided with: an eccentric cam that rotates in the plane direction in an eccentric manner, and has a closed-position-related portion formed at the maximum eccentric rotation position on one of the cam faces that has been rotated to have an orientation different by 180 degrees, and an open-position related portion formed at the minimum eccentric rotation position on the other cam face; a pressing means that presses the cam face of the eccentric cam by setting a pressing direction in the same direction as a direction formed by connecting the two positions of the closed-position-related portion and the open-position-related portion that have different orientations by 180 degrees through the shaft center of the eccentric cam, and, upon coming into contact with the closed-position-related portion on the cam face, increases the pressing load and the rotation regulating force to the eccentric cam so as to stop the rotation operation of the eccentric cam so that the pressing load to the eccentric cam is lowered as coming closer to the open-position-related portion, while, upon coming into contact with the open-position-related portion on the cam face, it increases the rotation regulating force to stop the rotation operation of the eccentric cam; and an angle regulating means that stops the rotation of the eccentric cam at a certain angle regulation position in the middle of the rotation of the eccentric cam in an eccentric manner, and in this structure, one of the eccentric cam and the pressing means is attached to the main body, and the other is attached to the cover so as to rotation-support the cover so that the cover is allowed to stop the rotation at the closed position, the open position and the angle regulation position.

In this case, the eccentric cam is allowed to rotate in a direction in the plane in an eccentric manner, and the rotary force of the eccentric cam is generated by the pressing force of the pressing means that presses the cam face of the eccentric cam. More specifically, the amount of eccentricity defers depending on the eccentric rotation position of the eccentric cam, and since the pressing load differs in proportion to the amount of eccentricity, the pressing load becomes higher at the maximum eccentric rotation position with a large amount of eccentricity to cause a force to shift to the minimum eccentric rotation position with a low pressing load so that the pressing means applies a rotary force to the eccentric cam.

Therefore, in the case when the maximum eccentric rotation position with a high pressing load at which the rotation regulating force is increased to stop the rotation is determined as the closed-position-related portion of the cover, by allowing the eccentric cam to slightly rotate from the closed-position-related portion, the rotation regulation to the eccentric cam is released so that the eccentric cam is allowed to energetically rotate in the opening direction by 180 degrees. Accordingly, the cover integral with the eccentric cam is allowed to automatically rotate by 180 degrees to open. This enables the user to carry out the opening operation through a one-touch operation by slightly pushing the cover by one hand, making it possible to improve the opening operability of the mobile terminal. In contrast, upon returning the cover to the original closed state, the cover is returned to the original state by rotating the cover by 180 degrees by the hand in the reverse rotation direction.

Moreover, in addition to the application of the eccentric cam as the cam face in its peripheral face, a concave groove and a convex stripe that guide the pressing means may be formed on at least one of the upper and lower faces along the peripheral face, and these concave groove and convex stripe may be used on the cam face.

In accordance with the above-mentioned pressing means, for example, by applying a spring pressing force onto the corresponding position of the cam face of the eccentric cam, the pressing force is always applied to the eccentric cam. Consequently, the pressing force is made different depending on the contact position to the eccentric cam, and the eccentric cam is allowed to have a different rotation direction depending on the contact angle to the cam face so that the eccentric cam is allowed to make a leftward rotation or a rightward rotation.

In this manner, by utilizing the pressing force of the pressing means as a rotary force in the cover opening direction, the cover can be automatically rotated from the closed position to the open position. Moreover, with respect to the correspondence between the eccentric cam and the pressing means, an engaging structure in which the two members are allowed to engage with each other or separate from each other at one point of the eccentric cam in the rotation direction may be used, and, for example, by making the concave section of the eccentric cam and the roller face of the pressing roller in concave/convex contact with each other, the cover can be accurately position-determined at one point of the rotation stop position at which the concave/convex contact is made. Since the pressing roller is allowed to follow the cam face while being made in rotation-contact the cam face, it is possible to obtain a smooth contacting operation. Moreover, besides the pressing roller, a convex portion that has a shape capable of sliding without rotating may be installed in place of the pressing roller.

The main body and the cover that are superposed on each other and coupled with each other are arranged so as to rotate relative to each other through the rotation support mechanism; therefore, members constituting the eccentric cam and the pressing means are respectively attached to one of the main body and the cover and the other in a corresponding manner, and these attached sides may be reversed.

In accordance with the present invention, an eccentric cam, which is allowed to rotate in a direction in the plane, and suitable for a thinner structure, can be adopted, and a pressing means, which presses the cam peripheral face of the eccentric cam in a direction in the plane, and is low in its bulk and suitably used for a thinner structure can be used in combination. Therefore, the resulting mechanism is not bulky vertically, and makes it possible to provide a small-size rotation support mechanism and consequently to provide a thinner mobile terminal.

Moreover, since the eccentric cam is position-regulated at an angle regulated position by the angle regulating means, the open position of the cover that is rotated in cooperation with the movement of the eccentric cam can be stopped in rotation not only at the closed position of 0 degree and the open position of 180 degrees, but also at a certain angle in between in the middle of the rotation. For this reason, the cover can be stopped in rotation at a position with a desired angle, such as in a lateral orientation.

Consequently, even when a longitudinally elongated display device that is the same as the cover is mounted, by allowing the cover to be laterally oriented, the display device can be viewed in the same laterally elongated state. In this case, since the longitudinally elongated main body remains in the longitudinal direction, as it is, this structure is suitable for such a case as to watch television images for a long time.

The angular regulating means may have a structure in which the pressing means that continuously gives a pressing force to the peripheral face of the eccentric cam is compatibly used as the angle regulating member so that the eccentric cam and the pressing means may be made in concave/convex contact with each other at a certain angle to be position-regulated. Moreover, an angle regulating member such as a plunger may be made in concave/convex contact with the upper face or the lower face of the eccentric cam at a certain angle so as to be position-regulated.

In accordance with an angle regulating means in another mode of the present invention, at least one intermediate regulating concave section that is made in concave/convex contact with the pressing means to rotation-regulate the eccentric cam in the middle of the rotation may be installed on the cam face through which the eccentric cam is allowed to rotate from the closed-position-related portion to the open-position-related portion by 180 degrees.

In accordance with the present invention, when the intermediate regulating concave section is formed on the cam face of the eccentric cam, the eccentric cam can be stopped in rotation at the position of the intermediate regulating concave section. For example, when the intermediate regulating concave sections are respectively formed on the cam face in the left rotation direction and the right rotation direction of the eccentric cam, the cover that rotates in cooperation with the movement of the eccentric cam can be stopped in rotation at a position with a certain angle in the middle of rotation of the cover in the left rotation direction as well as at a position with a certain angle in the middle of rotation thereof in the right rotation direction.

Moreover, not only one, but also a plurality of intermediate regulating concave sections may be formed on the cam face of the eccentric cam. For example, by forming the intermediate regulating concave sections at every constant angle on the cam face, the eccentric cam can be stopped in rotation at every constant angle. Therefore, the cover can be stopped in rotation at a desired angle so that the application modes for the users are further increased.

Here, with respect to the concave/convex contact at this time, by changing factors, such as the depth and the width of the concave/convex shapes and the tilting face, the positioning precision and the operation touch (click-touch) at the time of open/close-operating the cover can be changed to desired values. With respect to the concave/convex contact, one of the eccentric cam and the pressing means may be provided with the concave section, with the other being provided with the convex portion, and even when the concave and convex states are reversed, the same functions and effects can be obtained. Moreover, with this concave/convex contact mode, the cover can be stopped in rotation in a stable manner.

In this mode of the present invention, the intermediate regulating concave section may be formed at a rotation intermediate position on the cam face of the eccentric cam with the eccentric cam being located after making a 90-degree rotation from the closed-position-related portion.

In accordance with this invention, since the intermediate regulating concave section is prepared at the rotation intermediate position on the cam face at which the eccentric cam is located after making a 90-degree rotation, the eccentric cam can be stopped at a position where it is located after making a 90-degree rotation so that the cover is stopped in rotation in a lateral direction. Therefore, the display device mounted on the cover is placed in a laterally elongated state, that is, a lateral orientation that is suitable for such a case as to watch television images.

Moreover, in the case when the cover is rotated rightward as well as leftward, by forming the intermediate regulating concave section only on the cam peripheral face in one of the rotation directions, the cover can be rotated immediately from the closed position to the open position with the lateral orientation after making a 90-degree rotation in the one of the rotation directions. In the other rotation direction, the cover can be rotated immediately from the closed position to the open position with the longitudinal orientation after making a 180-degree rotation in the other rotation direction. In this manner, the open position can be selected between 90 degrees and 180 degrees depending on the cover rotation directions.

By using a mobile terminal having such a rotation support mechanism, when the cover is in a stand-by state in the closed position with 0 degree, since the pressing force of the pressing means exerts a rotary force from the cover closing direction toward the cover opening direction; therefore, when the cover is slightly rotated from the closed position so as to release the rotation regulation, the cover is allowed to energetically rotate in the opening direction, and stopped in rotation at an angle regulation position, for example, at 90 degrees in the middle of the rotation. When the cover is again pressed upward by a finger tip in the opening direction from this state, the angle regulation is released, and consequently, the cover is again allowed to rotate in the opening direction, and stopped in rotation at an open position with 180 degrees to open.

In contrast, in the case when the cover is in an open position with 180 degrees, and is open, by rotating the cover slightly by the hand in the returning direction to release the rotation regulation, the cover is returned in the closing direction, and stopped in rotation at an angle regulation position, for example, at 90 degrees in the middle of the rotation. When the cover is again returned in the closing direction from this state, the angle regulation is released, and consequently, the cover is allowed to smoothly rotate in the closing direction, and stopped in rotation at a closed position with 0 degree to be closed. In this manner, the user is allowed to easily operate the cover of a mobile terminal to open by one hand, and also to view the display device on the cover that is longitudinally or laterally oriented. Thus, the mobile terminal can be used more conveniently.

Upon operating the cover to open, the user can simply press the cover with a finger tip of one hand holding the mobile terminal so that the opening operation is automatically carried out; thus, it becomes possible to improve the opening operability of the mobile terminal. In contrast, upon returning the cover to the original position, the user can rotate the opened cover in the closing direction reversely by the hand so that the cover is returned to the original position.

Moreover, with respect to the mobile terminal, a mobile telephone constituted by a main body that is supported by the rotation support mechanism and a cover, a mobile apparatus such as an electronic notebook, and the like can be listed.

### EFFECTS OF THE INVENTION

In accordance with the present invention, with respect to a cover attached to a main body in its plane, an opening operation of the cover in a direction in the plane is carried out not manually, but semi-automatically; thus, a rotation support mechanism having a high application performance is prepared so that the user is allowed to operate the cover to open by one hand.
Moreover, this is further provided with a rotation stop function in multiple stages capable of stopping the rotation of the cover at a certain angle in the middle of the rotation so that it is possible to provide a mobile terminal that is suitable for a holding state for a long time.

### BRIEF DESCRIPTION OF THE DRAWINGS

Fig. 1 is a perspective outside drawing that shows a closed state of a mobile telephone in accordance with embodiment 1.
Fig. 2 is a perspective view that shows a mutual coupling relationship between a main body and a cover shown in embodiment 1.
Fig. 3 is a perspective view that shows a state in which the cover is operated to rotate to the right in embodiment 1.
Fig. 4 is a perspective view that shows a state in which the cover is operated to rotate to the left in embodiment 1.
Fig. 5 is an enlarged perspective view that shows an essential portion of a rotation support mechanism of embodiment 1.
Fig. 6 is an exploded perspective view that shows the rotation support mechanism of embodiment 1.
Fig. 7 is a perspective outside drawing that shows a mutual relationship between an eccentric cam and a pressing roller in a stand-by state of the rotation support mechanism of embodiment 1.
Fig. 8 is an outside drawing in which the eccentric cam of embodiment 1 is viewed from diagonally above as well as from above in an enlarged manner.
Fig. 9 is a perspective view that shows the outside and inside states of the rotation support mechanism when the cover starts to rotate to the right in embodiment 1.
Fig. 10 is a perspective view that shows the outside and the opened state of the inside of the rotation support mechanism in embodiment 1.
Fig. 11 is an explanatory drawing that shows a mutual relationship between an interlocking member and a press-rotating member of embodiment 1.
Fig. 12 is a perspective view that shows a state in which the interlocking member starts to rotate to the right in embodiment 1.
Fig. 13 is a perspective view that shows a mutual relationship between each of various rotation positions of the interlocking member and the press-rotating member in embodiment 1.
Fig. 14 is a perspective view that shows another pressing structure of the rotation support mechanism in embodiment 2.
Fig. 15 is a perspective view that shows a mutual coupling relationship between a main body and a cover in its closed state in embodiment 3.
Fig. 16 is a perspective view that shows a mutual coupling relationship between the main body and the cover in its open state in embodiment 3.
Fig. 17 is an enlarged perspective view that shows an essential portion of a rotation support mechanism of embodiment 3.
Fig. 18 is an exploded perspective view that shows the rotation support mechanism of embodiment 3.
Fig. 19 is a perspective view that shows a disposed state of a boss portion of a run-out stopping portion in embodiment 3.
Fig. 20 shows a side view and a longitudinal cross-sectional view that show a run-out stopping structure in a cover closed position of embodiment 3.
Fig. 21 is an enlarged longitudinal cross-sectional view that shows an essential portion indicating a butt state of the boss portions in embodiment 3.
Fig. 22 is a perspective view showing an essential portion of a slide state of a slider in embodiment 3.
Fig. 23 is an enlarged perspective view that shows the surface and back surface of the slider in embodiment 3.
Fig. 24 is a front view that shows the slide state of the slider of embodiment 3.
Fig. 25 is a perspective view that shows a disposed state of boss portions of a run-out stopping portion in embodiment 4.
Fig. 26 is a plan view that shows a rotation support mechanism with a cover supported in a lateral right position in embodiment 5.
Fig. 27 is an enlarged plan view that shows an eccentric cam of embodiment 5.
Fig. 28 is a plan view that shows a concave/convex contact state between the eccentric cam and a pressing roller in the lateral right position in embodiment 5.
Fig. 29 is a plan view that shows the rotation support mechanism with the cover supported in a lateral left position in embodiment 5.
Fig. 30 is a plan view that shows a concave/convex contact state between the eccentric cam and the pressing roller in the lateral left position in embodiment 5.
Fig. 31 is a plan view that shows the rotation support mechanism in a cover closed position in embodiment 5.
Fig. 32 is a plan view that shows the rotation support mechanism in a cover open position in embodiment 5.
Fig. 33 is an exploded perspective view that shows an angle regulating means of embodiment 6.
Fig. 34 is a perspective view of an essential portion showing a contact state between an eccentric cam and a base in the angle regulating means of embodiment 6.
Fig. 35 is a perspective view of an essential portion showing an assembled state of the angle regulating means of embodiment 6.
Fig. 36 is a longitudinal cross-sectional view showing an essential portion of the angle regulating means of embodiment 6.
Fig. 37 is a perspective view that shows an open operable state of the cover of a conventional mobile telephone.
Fig. 38 is a plan view that shows a state in which the cover of the conventional mobile telephone is laterally oriented.

### REFERENCE NUMERALS

- 11, 151, 261: Mobile telephone
- 12, 153, 263: Main body
- 13, 154,264: Cover
- 14, 141, 152, 262: Rotation support mechanism
- 18, 143, 158, 268: Pressing roller
- 19, 161, 265, 332: Eccentric cam
- 31, 266: Close-related concave section
- 32, 267: Open-related concave section
- 155, 252, 331: Base
- 157, 271: Slider
- 269, 270: Intermediate regulating concave section
- 272: Display device
- 336: Elevating plunger
- 337: Regulating concave section

### BEST MODE FOR CARRYING OUT THE INVENTION

Provision is made so that, when a cover is rotated in a plane in one rotation direction or the other rotation direction based upon a reference position formed by a longitudinally elongated main body and stopped in rotation, the cover can be stopped in rotation in a stable state at a longitudinal open position or a lateral open position, and the cover opening operation is semi-automatically carried out.

### Embodiment 1

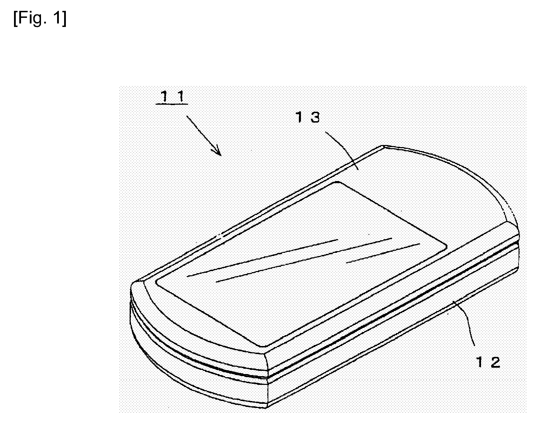

Referring to attached drawings, the following description will discuss one embodiment of the present invention.
These Figures show a mobile telephone of a horizontal rotation type, and in Fig. 1, this mobile telephone 11 of the horizontal rotation type has a horizontal rotation structure in which: a rectangular plate shaped main body 12 and a cover 13 of the same shape are superposed on each other so as to be opened in a direction in a plane, and the cover 13 in its superposed state is rotated in the plane direction so as to carry out opening and closing operations.

The outside surfaces, such as upper surfaces and side faces of the main body 12 and the cover 13, are equipped with a display device, not shown, used for utilizing various pieces of electronic information including telephone information and electronic mails, an input device and an antenna.

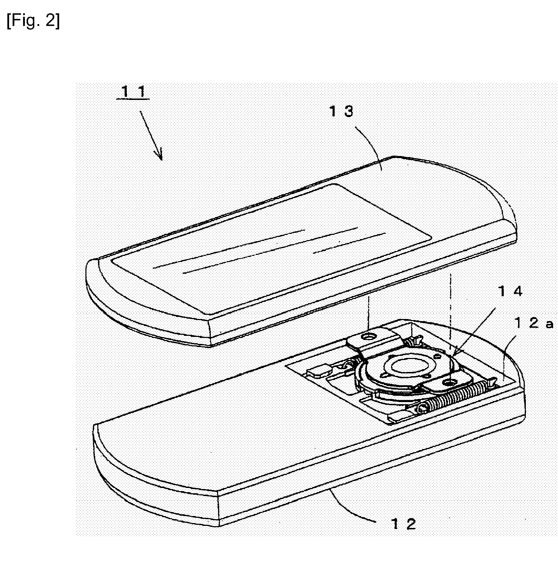

As shown in Fig. 2, upon coupling the cover 13 to the main body 12, the cover 13 on the upper side is coupled to the main body 12 on the lower side in a manner so as to be rotatable in the plane direction through a rotation support mechanism 14.

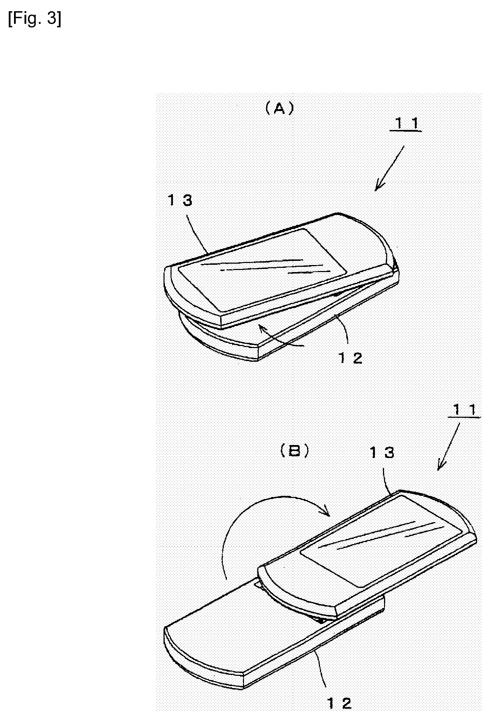

Upon rotating the cover 13 in the plane direction, as shown in Fig. 3(A), when the side face of the closed cover 13 is pushed with a finger tip to slightly shift leftward, the positional regulation of the rotation support mechanism 14 is released in cooperation with this movement so that a rotary force is exerted on the cover 13 in the opening direction. With this arrangement, as shown in Fig. 3(B), the cover 13 is allowed to automatically rotate by 180 degrees in the opening direction to open, and stopped in a state in which the main body 12 and the cover 13 are longitudinally stretched linearly.

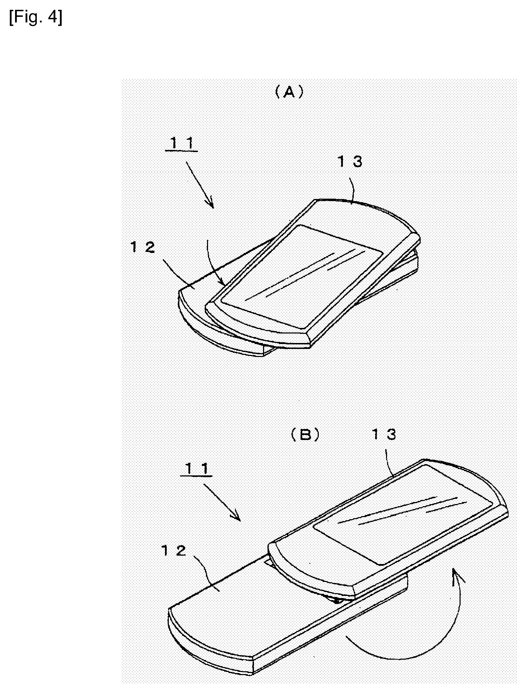

In the same manner, as shown in Fig. 4(A), when the side face of the cover 13 is pushed with a finger tip to slightly shift rightward, a rotary force is generated in the rotation support mechanism 14, which will be described later, in the opening direction in cooperation with this movement. Thereafter, as shown in Fig. 4(B), the cover 13 is allowed to automatically rotate by 180 degrees in the opening direction to be opened, and stopped in a state in which the main body 12 and the cover 13 are longitudinally stretched linearly.

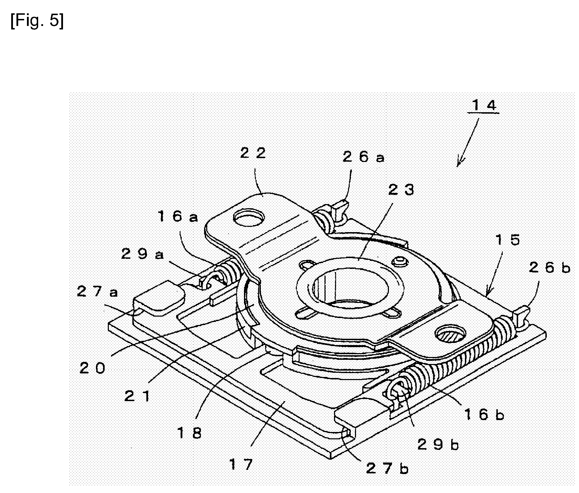

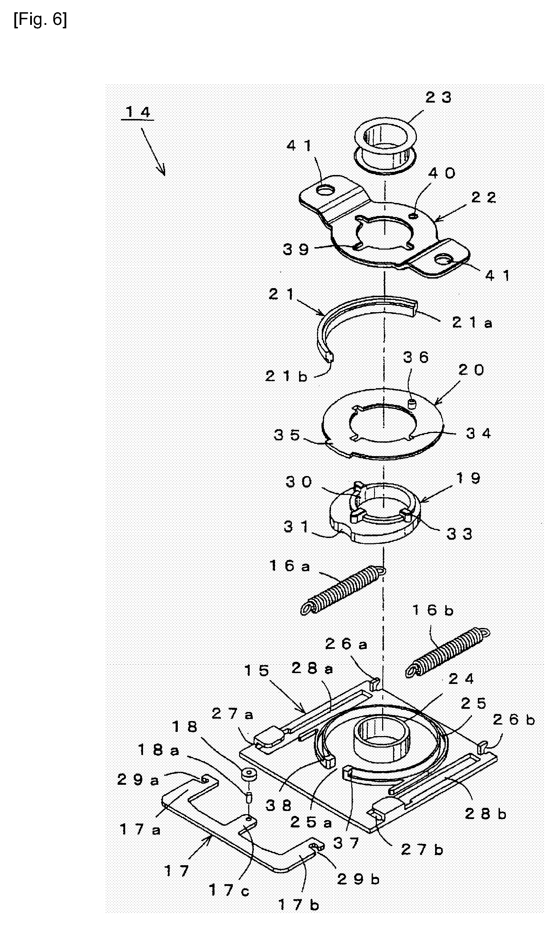

The rotation support mechanism 14 is provided with a laterally symmetrical supporting mechanism of a horizontally rotation type provided with a rotary force applying function used for rotating the cover 13 by 180 degrees from the closed position to the open position. As shown in Figs. 5 and 6, the supporting mechanism has a structure in which on the upper surface of a base 15, parallel springs 16a and 16b, a slider 17, a pressing roller 18, an eccentric cam 19, a rotary disc 20, an interlocking member 21 and a plate 22 are mounted. Here, the eccentric cam 19 corresponding to a rotation main portion of the supporting mechanism, the rotary disc 20 and the plate 22 are caulked and secured onto the base 15 by caulking tubes 23 in a manner so as to rotate thereon.

The base 15, which has a square plate shape, is integrally secured onto a concave section 12a (see Fig. 2) on one side of the upper surface of the main body 12 in a recessed state therein. A shaft-supporting cylinder 24, a round guide groove 25, spring stopping portions 26a and 26b and slide guide grooves 27a and 27b are formed on the upper face of the base 15, and the above-mentioned respective parts are attached to these.

First, in the shaft supporting cylinder 24, a cylinder member is attached to the center of the upper surface of the base 15 in a manner so as to protrude with a short height, and a caulking tube 23 is inserted and guided on the inner circumferential face side of the shift supporting cylinder 24. Moreover, an eccentric cam 19, which will be described later, a rotary disc 20 and a plate 22 are inserted and guided on the outer circumferential face side of the shaft supporting cylinder 24, and by caulking the caulking tube 23, the eccentric cam 19 and the like are shaft-supported in a manner so as to freely rotate thereon.

A round guide groove 25 having a concave shape in its cross-section is formed on the periphery forming a concentric circle of the shaft supporting cylinder 24 in a manner so as to protrude therefrom. Moreover, the interlocking member 21, which will be described later, is fitted to the round guide groove 25 so as to be slide-guided in the circular direction. Furthermore, spring stopping portions 26a and 26b are formed in a protruding manner on one end side of the right and left sides of the base 15 centered on the shaft supporting cylinder 24, and one end of each of the parallel springs 16a and 16b that will be described later is connected to this portion. Moreover, a reversed L-letter shaped member is formed in a protruding manner on the other end side of the right and left sides of the base 15 so that slide guide grooves 27a and 27b are formed, and one portion of the slider 17 which will be described later is slide-guided therein. Here, between a pair of right and left spring stopping portions 26a and 26b and the slide guide grooves 27a and 27b, thin elongated spring housing openings 28a and 28b that support the lower surface sides of the springs and guide the expansion and contraction of the string are respectively formed.

Next, the following description will discuss the parallel springs 16a and 16b.
The parallel springs 16a and 16b are allowed to have the same shape laterally, and placed on the base 15 in parallel with each other. The parallel springs 16a and 16b, which have a thin elongated coil shape, are allowed to contract in a linear direction, with one end to be expanded and contracted being engaged and stopped by each of the spring stopping portions 26a and 26b, with the other end being engaged and stopped by each of the spring stopping portions 29a and 29b of the slider 17, which will be described later.

Moreover, an extension action is exerted on the other end of each of the parallel springs 16a and 16b based upon a reference position in expansion and contraction formed by the spring stopping portions 26a and 26b on the base 15. With this arrangement, the slider 17 on the other end side is allowed to have a set pressing force in the same direction as the extending direction of the parallel springs 16a and 16b so that pressing operations are carried out toward the eccentric cam 19. Moreover, since the lower surface sides of the parallel springs 16a and 16b are housed and guided in the spring housing openings 28a and 28b, the parallel springs 16a and 16b are allowed to expand and contract in a stable manner.

The above-mentioned slider 17 has a flat plate shape in an E-letter form, and spring stopping portions 29a and 29b are formed on two end members 17a and 17b having the E-letter form, and the other ends of the parallel springs 16a and 16b are respectively engaged and stopped by these spring stopping portions 29a and 29b. Thus, the slider 17 is pulled in the pressing direction, and allowed to slide in the expanding and contracting directions of the springs 16a and 16b.

Moreover, on the upper surface of the base 15 that opposes the sliding direction of the two end members 17a and 17b of the slider 17, slide guide grooves 27a and 27b are formed between the upper surface of the base 15 and the reversed L-letter member raised upright therefrom so that the slider 17 is guided so as to slide in a stable manner.

Moreover, a pressing roller 18 is shaft-supported to a protruding member 17c that sticks out in the center of the E-letter form of the slider 17 by a pin 18a so as to be freely rotated in the plane direction. For this reason, the pressing roller 18 is positioned in the center of the slider 17, and one point of the pressing roller 18 is allowed to always press the eccentric cam 19, which will be described later.

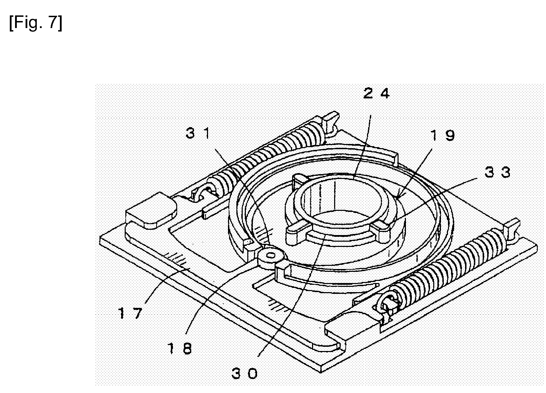

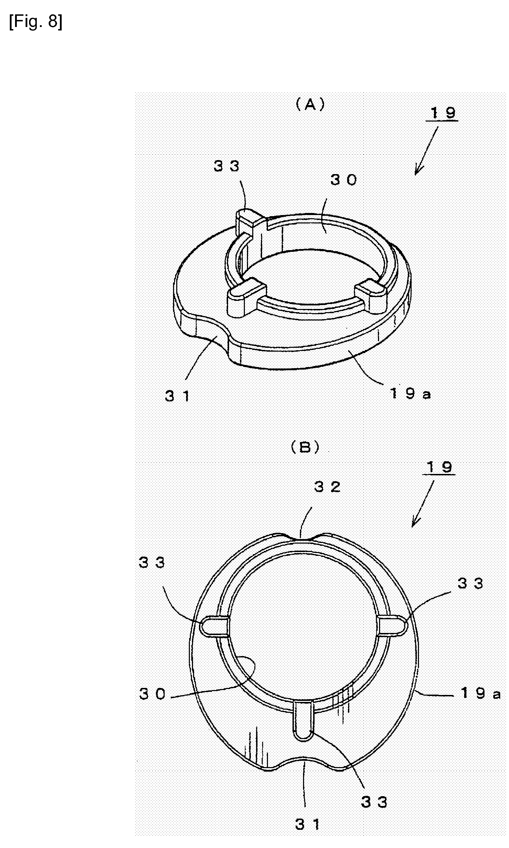

As shown in Figs. 7 and 8, the above-mentioned eccentric cam 19 has an elliptical plate shape, with a shaft hole 30 through which the shaft supporting cylinder 24 is inserted so as to freely rotate therein being formed in the center portion thereof. Moreover, the eccentric cam 19, which rotates centered on the shaft hole 30, is provided with an close-related concave section 31 used for receiving the roller face of the pressing roller 18 at a maximum eccentric rotation position having the maximum amount of eccentricity on one of peripheral surfaces having different directions by 180 degrees, and an open-related concave section 32 used for receiving the roller face of the pressing roller 18 at a minimum eccentric rotation position having the minimum amount of eccentricity on the other of the peripheral surfaces having different directions by 180 degrees.

In this case, when a convex shaped roller face of the pressing roller 18 that protrudes with a circular shape is made in concave/convex contact with the close-related concave section 31 having a larger amount of eccentricity of the eccentric cam 19, the spring pressure becomes higher to increase a pressing load and a rotation-regulating force to the eccentric cam 19 so that the rotation of the eccentric cam 19 is regulated. As a result, at the time when the pressing roller 18 has been made in concave/convex contact with the close-related concave section 31 of the eccentric cam 19, the rotation of the eccentric cam 19 is stopped.

Moreover, upon rotation of the eccentric cam 19, as the pressing roller 18 is coming closer from the close-related concave section 31 toward the open-related concave section 32, the amount of eccentricity of the eccentric cam 19 becomes smaller; therefore, the pressing load to the eccentric cam 19 becomes lower. Then, when the pressing roller 18 has been made in concave/convex contact with the open-related concave section 32, the amount of eccentricity of the eccentric cam 19 becomes smaller to make the spring pressure weaker, thereby also making the pressing load to the eccentric cam 19 weaker; however, since the rotation regulating force derived from the mutual concave/convex relationship is high, the rotation of the eccentric cam 19 is regulated. For this reason, when the pressure roller 18 has been made in concave/convex contact with the open-related concave section 32 of the eccentric cam 19, the rotation of the eccentric cam 19 is stopped.

Moreover, when the close-related concave section 31 and the open-related concave section 32 of the pressing roller 18 and the eccentric cam 19 are made in concave/convex contact with each other, the pressing roller 18 moves in the pressing direction integrally with the slider 17 to exert a pressing force toward the center of the eccentric cam 19. For this reason, upon receipt of this pressing force, the eccentric cam 19 has its rotation regulating force increased, and the loads to the rotation directions on the two sides are balanced with each other so that the pressing balance is properly maintained. As a result, when the pressing roller 18 is placed at each of the positions related to the corresponding concave sections 31 and 32, no rotation force is generated in the eccentric cam 19.

Moreover, a plurality of engaging protrusions 33 used for stopping the rotation are formed on the peripheral upper surface of the shaft hole 30 so as to protrude therefrom, and a rotation disc 20 and a plate 22, which will be described later, are integrally engaged and secured onto these engaging protrusions 33 from above. The above-mentioned rotation disc 20 is fitted from above to the peripheral edge of the shaft hole 30 of the eccentric cam 19, with the engaging concave sections 34 being engaged with the engaging protrusions 33 of the eccentric cam 19, so that the rotation disc 20 is integrally engaged and secured to the eccentric cam 19. Moreover, a press-rotating member 35 is extended and placed in the radial direction on one portion of the peripheral face of the rotation disc 20, and upon rotation of the press-rotating member 35, an interlocking member 21 is press-rotated so as to be pivoted. Moreover, an up-right pin 36 is attached to the upper face of the rotation disc 20 so as to protrude therefrom, and a press-in hole 40 of a plate 22, which will be described later, is press-in attached to the up-right pin 36 to be secured thereto so that the rotation disc 20 and the plate 22 are integrally attached to each other.

The interlocking member 21 has a bow shape that follows the arc shape having the same curvature as that of the round guide groove 25, and is engaged with the round guide groove 25 so as to slide therein. Thus, when the rotation disc 20 is rotated, it is pressed by the press-rotating member 35 that rotates integrally with the rotation disc 20, and rotated in association therewith in the same direction. Moreover, one end face 21 a and the other end face 21 b having a thin elongated bow shape of the interlocking member 21 are formed on a position regulating face in the rotation direction so that the end portions 21 a and 21 b of the interlocking member 21 are position-regulated inside the round guide groove 25.

The round guide groove 25 is placed in a manner so as to surround the outside of the eccentric cam 19 located in the center, and formed into a round shape having such a size as not to come into contact with the eccentric cam 19 located on the center side even when it is eccentrically rotated. Moreover, an advancing and retreating passage 25a, formed by cutting out one portion of the round shape, is opened at a position opposing to the pressing roller 18 that faces the eccentric cam 19 and applies a pressing force from the outside of the round guiding groove 25 toward the eccentric cam 19. With this arrangement, the pressing roller 18 is allowed to slide in the pressing direction.

Moreover, the guiding length of the round shape of the round guiding groove 25 is set to a guiding length capable of providing a rotation of about 350 degrees, prepared by deducting therefrom the length of the passage width formed by cutting out the portion of the pressing roller advancing and retreating passage 25a. The interlocking member 21 is allowed to rotate leftward or rightward within the rotation range of this guide length so as to shift cooperatively. Moreover, of the two guide ends in these rotation directions, a left rotation stopper 37 is attached to one end, and a right rotation stopper 38 is attached to the other end.

Thus, the interlocking member 21 rotates leftward or rightward cooperatively with the rotation disc 20. When the eccentric cam 19 attached integrally with the cover 13 has reached the open-related concave section 32, one end face 21 a of the interlocking member 21 that has been cooperatively shifted is position-regulated by the left rotation stopper 37, or the other end face 21 b of the interlocking member 21 is position-regulated by the right rotation stopper 38. For this reason, the exceeding rotation of the interlocking member 21 that tries to rotate in a manner so as to exceed the open-related concave section 32 is position-regulated.

Therefore, when the interlocking member 21 is rotation-regulated in one rotation direction or in the other rotation direction, the rotation disc 20 is also rotation-regulated in the same direction, thereby stopping the rotation at the open position of the cover 13.

The above-mentioned left rotation stopper 37 and right rotation stopper 38 are symmetrically formed laterally, and receive the interlocking member 21 that is shifted circularly inside the round guide groove 25 so as to rotation-regulate it. In contrast, the press-rotating member 35 of the rotation disc 20 is allowed to rotate at a position higher than the respective rotation stoppers 37 and 38. For this reason, the press-rotating member 35 is not made in contact with the respective rotation stoppers 37 and 38, and is allowed to rotate within 360 degrees so that no problems arise with respect to the rotation directions.

Thus, the rotation disc 20 at a stand-by position is maintained in a state capable of cooperatively rotating the interlocking member 21 through the press-rotating member 35, and the cover 13, integrally attached with the rotation disc 20, is allowed to rotate either one of right and left rotation directions. In contrast, when the cover 13 is rotated by 180 degrees, and operated to open, one end face 21 a or the other end face 21 b of the interlocking member 21 is made in contact with either one of the rotation stoppers 37 and 38 so as to be rotation-regulated so that the rotation of the rotation disc 20 in the open position is regulated. Therefore, the cover 13 integrally attached to the rotation disc 20 through the plate 22, is prevented from being excessively rotated in the open position.

The above-mentioned plate 22 is provided with an engaging concave section 39 to be engaged with an engaging protrusion 33 of the eccentric cam 19, and is superposed from above to be integrally engaged. Moreover, upon engaging, the press-in hole 40 of the plate 22 is press-attached to the up-right pin 36 of the rotation disc 20 so that the rotation disc 20 and the plate 22 are integrally coupled. Moreover, by attaching coupling holes 41 formed on the two sides of the plate 22 to coupling pins, not shown, of the cover 13 so as to be secured thereto, the cover 13 is integrally attached, with the main body 12 and the cover 13 being integrally coupled with each other. Thus, the cover 13 is allowed to rotate integrally with the eccentric cam 19, the rotation disc 20 and the plate 22, around the shaft supporting cylinder 24 of the main body 12. As a result, the cover 13 is allowed to rotate leftward or rightward in a direction in the plane.

The caulking tube 23 is inserted on the inner circumferential face side of the shaft supporting cylinder 24 so that by caulking the upper and lower ends thereof, the plate 22, the rotation disc 20 and the eccentric cam 19 are coupled to the base 15 so as to be rotated.

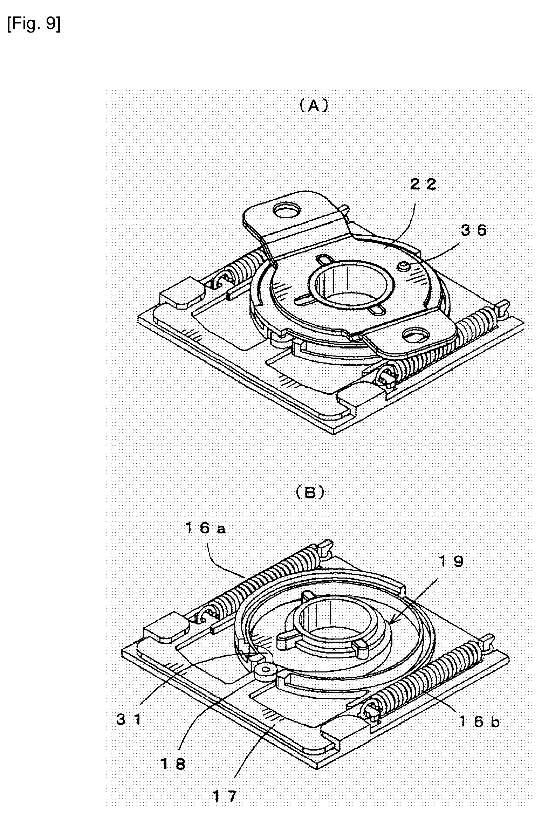

Referring to operation explanatory drawings of Figs. 9 to 13, opening and closing operations of the rotation support mechanism 14 having the above-mentioned structure will be explained more specifically.
Normally, in the stand-by state of the mobile telephone 11, it is kept in a closed state (see Fig. 1) with the main body 12 and the cover 13 being closed and superposed on each other. In the case when the user holds the mobile telephone 11 in this closed state by one hand, by slightly pressing the cover 13 with a finger tip of the hand holding the telephone to be shifted, for example, in the rightward plane direction (see Fig. 3), the plate 22 of the rotation support mechanism 14 and the rotation disc 20 are slightly rotated in the same rightward direction, as shown in Fig. 9(A).

At this time, as shown in Fig. 9(B), the eccentric cam 19 is also slightly rotated rightward; thus, the eccentric cam 19 is allowed to slightly rotate rightward, with the concave/convex contact state between the pressing roller 18 and the close-related concave section 31 being released.

In this case, the concave/convex contact state of the eccentric cam 19 between the close-related concave section 31 of the eccentric cam 19 and the pressing roller 18 is slightly offset with the result that the fitted relationship at the mutual closed positions is offset. For this reason, the eccentric cam 19 starts to rotate rightward energetically in a manner so as to avoid the pressing force of the pressing roller 18 applied thereto with a high load. Then, upon receipt of the pressing force, the eccentric cam 19 is allowed to rotate by 180 degrees instantaneously from the close-related concave section 31 to the open-related concave section 32.

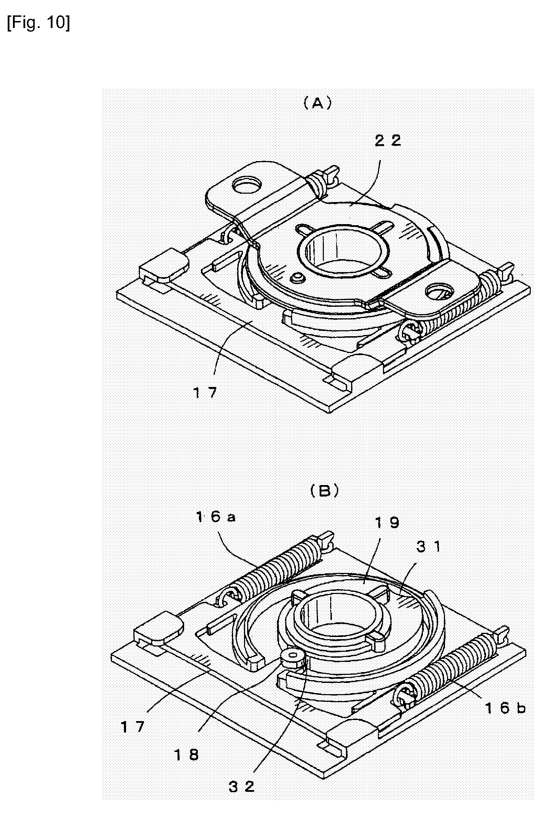

Moreover, as shown in Fig. 10(B), upon rotation of the eccentric cam 19 by 180 degrees, the open-related concave section 32 and the pressing roller 18 are made in concave/convex contact with each other, and at the time when the concave/convex contact state has been made, the rotation is regulated and stopped with a pressing balance being properly maintained. Upon this energetic rotation operation of the eccentric cam 19, the cover 13 integrally attached to the eccentric cam 19 is energetically rotated by 180 degrees as shown in Fig. 10(A) so that the cover 13 is automatically open-operated. Because of the laterally symmetric structure, this opening operation is also carried out in the same manner in the case of a leftward rotation.

In this manner, in the case when the maximum eccentric rotation position with a high pressing load is set to the close-related concave section 31 of the cover 13, by slightly rotating the eccentric cam 19 from the close-related concave section 31, the eccentric cam 19 is allowed to energetically rotate by 180 degrees. With this arrangement, by allowing the cover 13 integrally attached to the eccentric cam 19 to manually make an initial rotation, the cover 13 can be then automatically rotated by 180 degrees to be opened. For this reason, the user can carry out an opening operation through a one-touch process by slightly pressing the cover 13 by one hand so that the opening operability of the mobile telephone 11 is improved. In contrast, when the cover 13 is returned to the original closed state, the cover 13 is rotated with the hand by 180 degrees in the reversed rotation direction to return it to the original state.

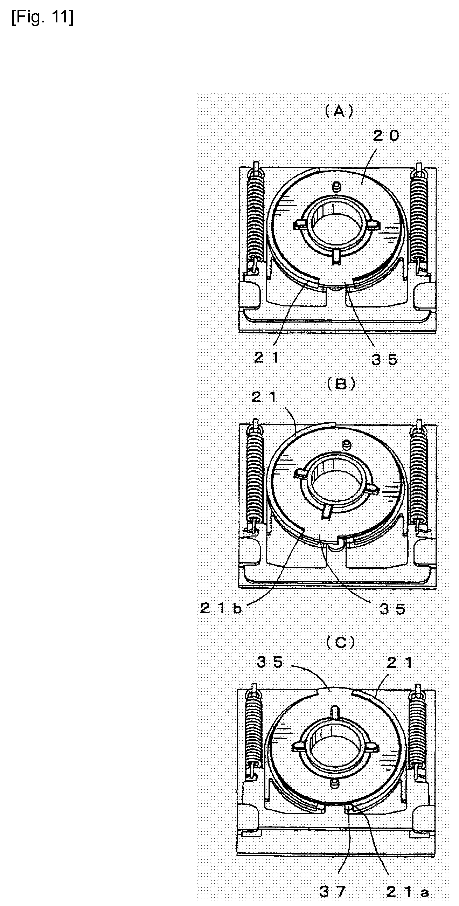

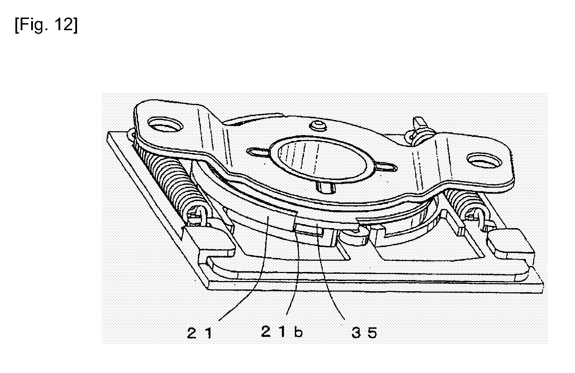

Next, the following description will discuss the rotation regulating operation of the cover 13 to be carried out to regulate the amount of rotation when the 180-degree rotation is made in accordance with the above-mentioned opening operation.
When the cover 13 is in the closed state, the press-rotating member 35 of the rotation disc 20 is located in a stand-by position on the lower side of the eccentric cam in a stand-by state for rotation, as shown in Fig. 11 (A). When the rotation disc 20, integrally attached with the plate 22, is slightly rotated rightward from this stand-by state, as shown in Fig. 11 B and Fig. 12, the other end face 21 b of the interlocking member 21, made in contact with the rotation side of the press-rotating member 35 of the rotation disc 20, is pressed so that the interlocking member 21 is rotated cooperatively. Moreover, when the press-rotating member 35 has made a 180-degree rotation so that the cover 13 has reached the closed position as shown in Fig. 11 (C), the interlocking member 21 is also allowed to make a 180-degree rotation so that at this time, one end face 21 a of the interlocking member 21 comes into contact with the leftward rotation stopper 37 of the round guide groove 25, thereby regulating the rotation.

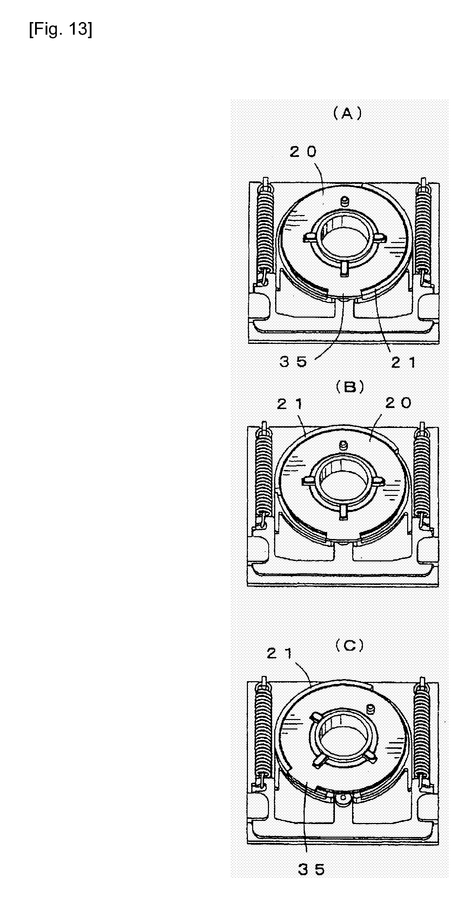

For this reason, when the cover 13 is operated by rotating rightward by 180 degrees to be opened, the excessive rightward rotation is regulated to maintain the open position. This makes it possible to regulate the excessive rotation operation of the cover 13. As shown in Fig. 13(A), by rotating the cover 13 reversely by 180 degrees, the rotation disc 20 is also returned to its original position. In the same manner, when the cover 13 is operated by rotating rightward by 180 degrees to be opened, the excessive rotation of the cover 13 is also regulated in the same manner because of the laterally symmetrical structure.

Moreover, in the case when the opening operation is suspended during the opening operation of the cover 13, the interlocking member 21 is left interpolated at the middle position of the round guiding groove 25 as shown in Fig. 13(B). However, as shown in Fig. 13(C), in the next opening operation, since the press-rotating member 35 of the rotation disc 20 presses the interlocking member 21 so as to move cooperatively, the position regulating operation is positively available whatever position in the round guiding groove 25 the interlocking member 21 is located.

Moreover, since each of the rightward and leftward rotation amounts of the cover 13 is regulated to 180 degrees, the inner wiring is also regulated to movements within the rotation range of not more than 180 degrees so that the inner wiring is not subjected to an excessive twisting action. Consequently, even when the cover is frequently subjected to opening and closing operations, the wiring can be maintained in a stable manner.

### Embodiment 2

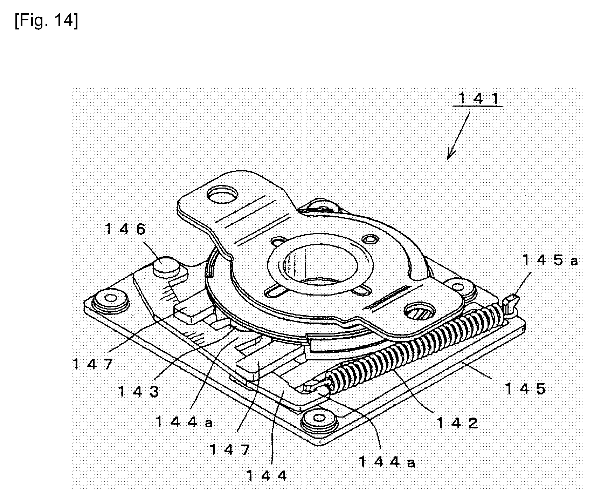

Fig. 14 shows another embodiment of the rotation support mechanism, and this rotation support mechanism 141 is different from the rotation support mechanism 14 of the aforementioned embodiment 1 only in its pressing structure, and since the other structures are the same, only the different pressing structure will be explained.

The pressing structure of the rotation support mechanism 141 is provided with a coil-shaped single pressing spring 142 and a tilting lever 144 to which a pressing roller 143 is additionally attached, which are combined based upon the lever principle.

The pressing spring 142 is prepared as a single member to reduce the number of parts, and a base end portion of the coil-shaped thin elongated pressing spring 142 is engaged with and stopped by a spring engaging stop portion 145a that is formed at one corner on a base 145 so as to protrude therefrom, with a free end that is allowed to expand and contract based upon the base end being connected to the free end of the tilting lever 144, which will be described later, so as to be engaged and stopped thereby.

The above-mentioned tilting lever 144 is formed into an E-letter shape, and a base end of the tilting lever 144 is shaft-supported onto a corner portion which is diagonal to the spring engaging stop portion 145a on the base 145 through a support pin 146, so as to freely tilt thereon. The pressing roller 143 is shaft-supported onto a protruding member 144a that protrudes in the center of the E-letter-shaped tilting lever 144 so as to freely rotate in the plane direction.

The free end of the pressing spring 142 is connected to the spring engaging stop portion 145a formed on the free end of the tilting lever 144. With this arrangement, the tilting lever 144 is shaft-supported at the supporting pin 146 serving as a tilting fulcrum based upon the lever principle so as to freely tilt in the pressing direction. With this arrangement, the pressing roller 143 is pressed and urged in the pressing direction. Moreover, a tilting guide member 147 is placed in parallel with the upper surface of the base 145 in the tilting direction of the tilting lever 144 so as to guide the tilting movement. By using the pressing structure of this type, the same functions and effects as those of the aforementioned embodiment can be obtained as well.

### Embodiment 3

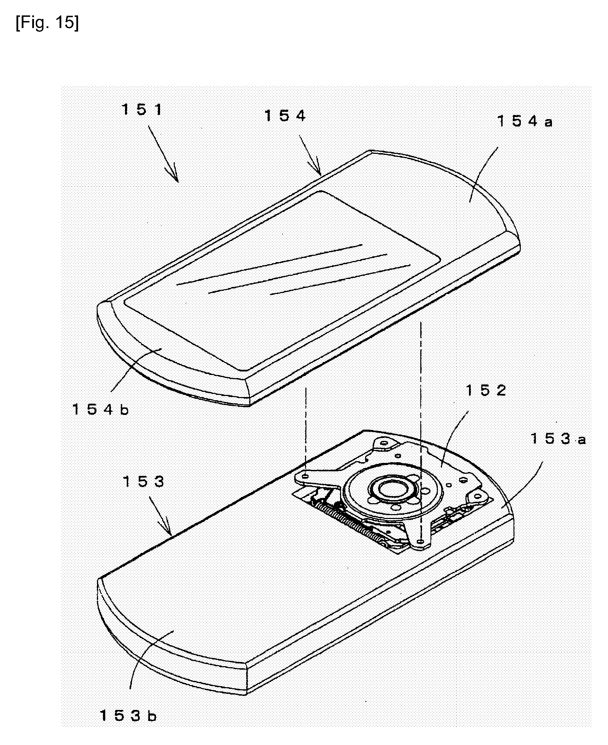

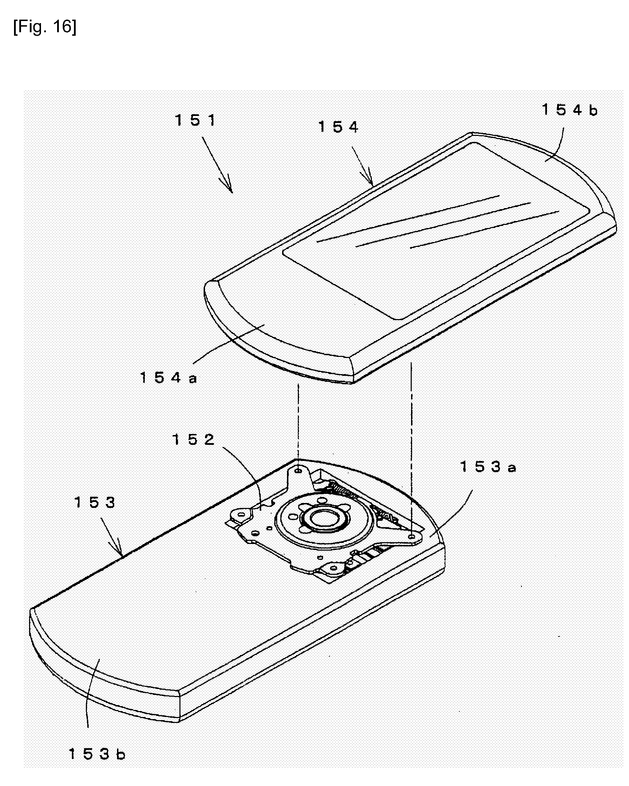

Figs. 15 and 16 show another embodiment of a rotation support mechanism 152 that is installed in a mobile telephone 151 of a horizontal rotation type. The present embodiment is different from the rotation support mechanism 14 of the aforementioned embodiment 1 in that the run-out preventive function for the cover is enhanced and in that the tilting guide function for the slider is enhanced, and has the same functions in the other portions; therefore, only the structures of the different portions will be explained.

The rotation support mechanism 152 is attached to a position at which both of overlapping portions of a main body 153 and a cover 154 that are made face to face with each other are longitudinally coupled and shaft-supported, and the shaft-supporting position of the rotation support mechanism 152 is placed on the side of the base ends 153a and 154a corresponding to one side in the length direction of the closed position along which the cover 154 is superposed on the main body 153 and closed. For this reason, when the cover 154 is rotated from the closed position to the opened position by changing the orientation by 180 degrees, with the rotation support mechanism 152 serving as a pivot fulcrum, the two tip portions 153b and 154b of the main body 153 and the cover 154 are made farthest apart from each other into a longitudinally elongated state so that the upper surface of the main body 153 is exposed.

When the cover 154 is in the opened position, the lengths of the main body 153 and the cover 154 are extended linearly with their orientations being changed respectively by 180 degrees, and the cover 154 tends to be placed in the most unstable supported state. For this reason, the rotation support mechanism 152 is allowed to have a run-out preventive function so as to prevent the cover 154 from being supported unstably.

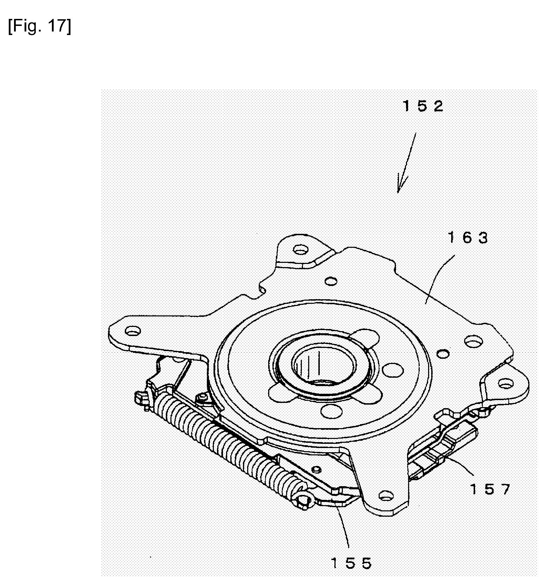

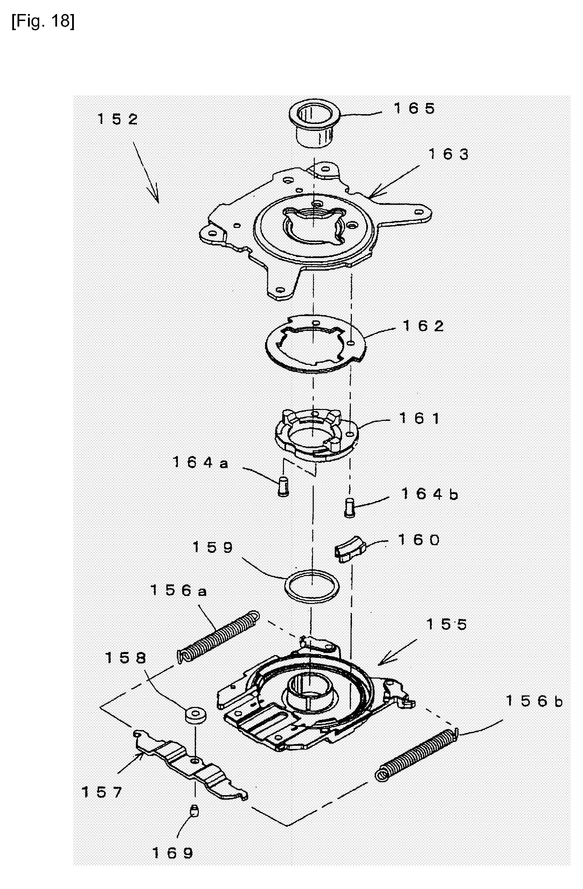

As shown in Figs. 17 and 18, the rotation support mechanism 152 has a structure in which parallel springs 156a and 156b, a slider 157, a pressing roller 158, an elastic ring 159, an interlocking member 160, an eccentric cam 161, a rotation disc 162 and a plate 163 are installed on the upper face of a base 155. Here, the eccentric cam 161, the rotation disc 162 and the plate 163, which correspond to rotation main members, are superposed longitudinally by respective coupling pins 164a and 164b and coupled into an integral part, and this is further caulked and secured to the base 155 by a caulking tube 165 so as to freely rotate thereon.

Next, the following description will discuss a run-out stopping unit 166 in the rotation support mechanism 152.
This run-out stopping unit 166 is constituted by small boss portions P1, P2, B1 to B4 that are placed on both of the opposing faces of the base 155 and the plate 163 in the superposing direction so as to be made face to face with each other from the respective two faces in an abutted manner.

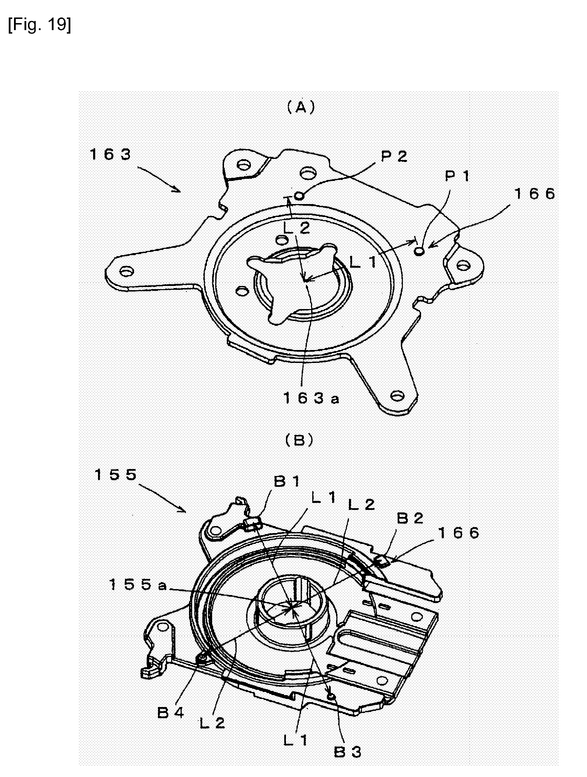

On the plate 163 side shown in Fig. 19(A) that is one of the two sides, the first boss portion P1 and the second boss portion P2 are placed as spots at positions that are not located on the same concentric circle with respectively different distances in the radial direction determined from the shaft center portion 163a in the center, which is opened in the center of the plate 163 that is shown with the lower surface facing down, with the positions being located on the plate base end corresponding to the base end 154a side of the cover 154.

In this structure, on the plate 163 side, the first boss portion P1 is allowed to have a first distance L1 that is longer from the shaft center portion 163a, and the second boss portion P2 is allowed to have a second distance L2 that is shorter from the shaft center portion 163a.

On the base 155 side shown in Fig. 19(B) that is the other side, the first boss portion B1 and the second boss portion B2 are placed as spots at positions that are not located on the same concentric circle with respectively different distances in the radial direction determined from the shaft center portion 155a in the center, which is opened in the center of the base 155, with the positions being located on the base end of the base corresponding to the base end 153a side of the main body 153, and the third boss portion B3 and the fourth boss portion B4 are formed as spots at symmetrical positions, that is, at positions located on the tip end of the base corresponding to the tip end 153b side of the main body 153 corresponding to positions rotated by 180 degrees.

In this structure also, on the base 155 side, the first boss portion B1 and the third boss portion B3 are allowed to have a first distance L1 that is longer from the shaft center portion 155a, and the second boss portion B2 and the fourth boss portion B4 are allowed to have a second distance L2 that is shorter from the shaft center portion 155a.

In this case, by preparing a plurality of butt portions of the boss portions longitudinally facing each other, the corresponding boss portions are made in contact with each other so that the contact stability between the upper pate 163 and the lower base 155 is enhanced. When the cover 154 is in the closed position, the opposing faces of the plate 163 and the base 155 are mutually made in contact with each other with point contacts between the first boss portions P1 and B1 as well as between the second boss portions P2 and B2 so that the possibility of wobbling between the upper plate 163 and the lower base 155 is eliminated, making it possible to eliminate wobbling of the cover 154 in the superposing direction.

Moreover, in the case when the cover 154 is rotated from the closed position of the cover 154 by 180 degrees to the open position, on the two opposing faces of the base 155 on the main body side and the plate 163 on the cover side, the first boss portion P1 and the second boss portion P2 sticking out on the tip end side of the plate 163 that has made a 180-degree rotation are made face to face with the third boss portion B3 and the fourth boss portion B4 sticking out on the tip end side of the base 155 in an abutted state.

In this manner, when the cover 154 is rotated by 180 degrees to the open or closed position, the boss portions are mutually made in contact with each other at the respective positions. For this reason, by simply making the boss portions sticking out in the superposing direction mutually in contact with each other locally, the possibility of wobbling between the upper and lower opposing faces can be eliminated so that the wobbling of the cover 154 can be completely prevented, thereby making it possible to provide stable opening and closing operation touches.

Moreover, the positions of the boss portions P1, P2, B1 to B4 at the respective butt portions are placed as spots at different positions that are not located on the same concentric circle on the plate 163 side and the base 155 side so that the boss portions P1, P2, and B1 to B4 at the respective butt portions are not placed on the same concentric circle. Consequently, since, even when the cover 154 is operated to rotate, no other boss portions are located in the rotation direction, it is possible to avoid the mutual interference among the boss portions P1, P2 and B1 to B4, and consequently to ensure a smooth rotation of the cover 154.

In the case when the cover 154 is in the closed position, an initial rotation force is manually applied toward the open position, and thereafter, pressing forces of the parallel springs 156a and 156b are exerted to carry out the rotation operation; therefore, the boss portions are made in a contact state that allows a slight degree of sliding. However, in the case when it is in the open position, since the pressing forces of the parallel springs 156a and 156b are lowered to cause an excessive reduction in a releasing torque, the butt height of the boss portions is preferably made lower at the open position than that at the closed position.

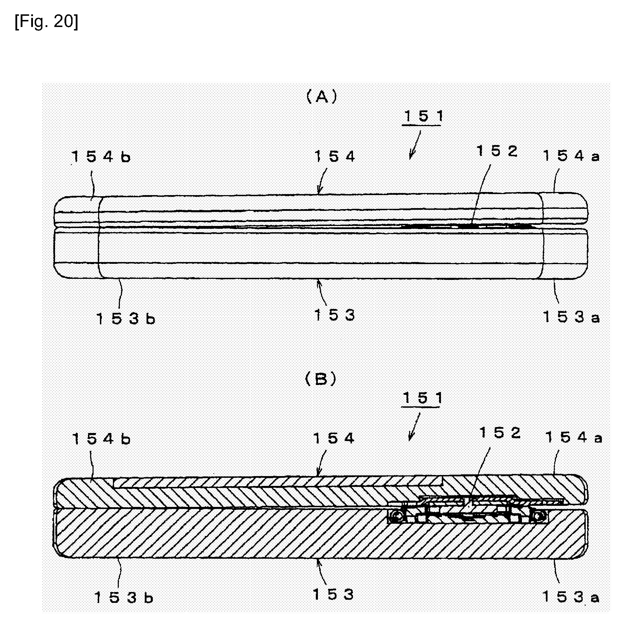

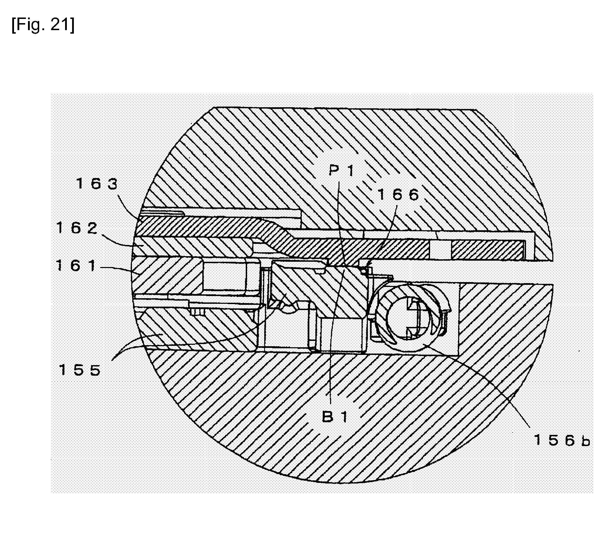

Moreover, in the closed position where the main body 153 and the cover 154 are superposed on each other, as shown in Fig. 20 and Fig. 21, since the boss portions P1, P2 B1 and B2 are made face to face with each other vertically on the base ends 153a and 154a, the shaft support portion can be tilted by increasing the applied pressure onto the tip 154b side of the cover in the superposing direction with the shaft support portion being used as a tilt fulcrum. Therefore, the tip 154b side of the cover is allowed to tilt toward the tip 153b side of the main body, and made in press-contact with each other so that upon closing the cover 154, it is possible to completely eliminate wobbling in the superposing direction.

Moreover, in the case when the cover 154 is operated to open, since the upper and lower boss portions P1, P2, B3 and B4 are mutually made in contact with each other to eliminate the possibility of wobbling, the wobbling can be completely prevented.

Moreover, between upper and lower opposing faces where the plate 163 attached to the cover 154 and the base 155 attached to the main body 153 are made face to face with each other, the aforementioned elastic ring 159 is interposed so as to exert a function for absorbing variations in up and down directions. This elastic ring 159 may be prepared as any member made from rubber, metal or the like, as long as it exerts elasticity in up and down directions, and by interposing the elastic ring 159, the contact stability of the cover 154 is improved, and the effect for preventing wobbling of the cover is also further enhanced.

The following description will discuss a tilt guiding function for the slider 157.
When the slider 157 is allowed to slide in the sliding direction, the slider 157 and the base 155 are rubbed with each other to wear due to the movements of the slider 157, resulting in a gap between the slider 157 and the base 155. The occurrence of this gap tends to cause the slider 157 to have an unstable sliding operation that is carried out in the slide width direction in a rattling manner. For this reason, the slider 157 is provided with a tilt guiding portion 167 and a center slide guiding portion 168 so as to ensure a stable sliding operation.

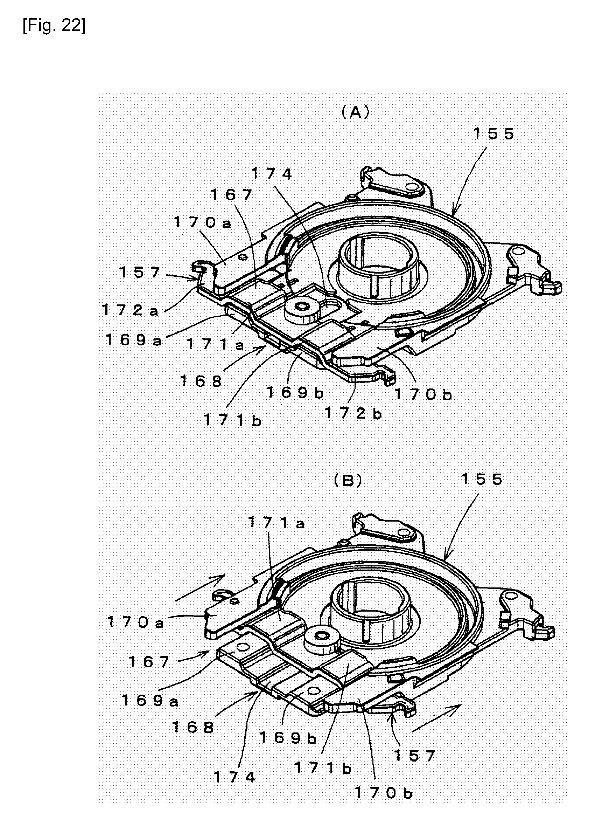

The tilt guiding portion 167 provides a tilt guiding function by tilting both of the base 155 and the slider 157 relative to each other. As shown in Fig. 22(A), lower trapezoidal guide faces 169a and 169b, each having a trapezoidal shape in its cross section, and engaging protrusion members 170a and 170b are placed on the two sides of the upper face of the base 155 in the slide width direction, and on the two sides in the slide width direction of the laterally elongated slider 157 that is slide-guided while being made in concave/convex contact with these, upper trapezoidal guide faces 171 a and 171 b, each having a trapezoidal shape in its cross section, and horizontal members 172a and 172b with the same corresponding concave and convex shapes that are made in tilt-contact with each other in a superposed manner are placed.

Moreover, with the upper trapezoidal guide faces 171 a and 171 b of the slider 157 being mounted on the lower trapezoidal guide faces 169a and 169b of the base 155 so as to be made in concave/convex contact with each other vertically, these members are attached so as to freely slide thereon.

With this arrangement, as shown in Fig. 22(B), the slider 157, pressed onto the base 155 by the parallel springs 156a and 156b, is pressed toward the shaft center portion, and slide-guided so as to freely advance and retreat. At this time, the trapezoidal guide faces 169a, 169b, 171 a and 171 b are made face to face with each other in a tilted manner on the two sides in the slide width direction, and the two sides support the horizontal members 172a and 172b on the two sides of the slider 157 so as to slide thereon by the engaging protrusion members 170a and 170b.

In particular, since the contact guide portions between the slider 157 and the base 155 are mutually made face to face with each other in a tilted manner, it is possible to obtain a contact-guiding function with respect to three-dimensional directions, and consequently to eliminate rattling in the slide-width direction; thus, it becomes possible to obtain a stable slide-guiding function with little contact variations. Moreover, since the tilt-guiding operations are carried out on the two sides in the slide width direction, slide-guiding functions that are exerted uniformly on the two side positions can be obtained.

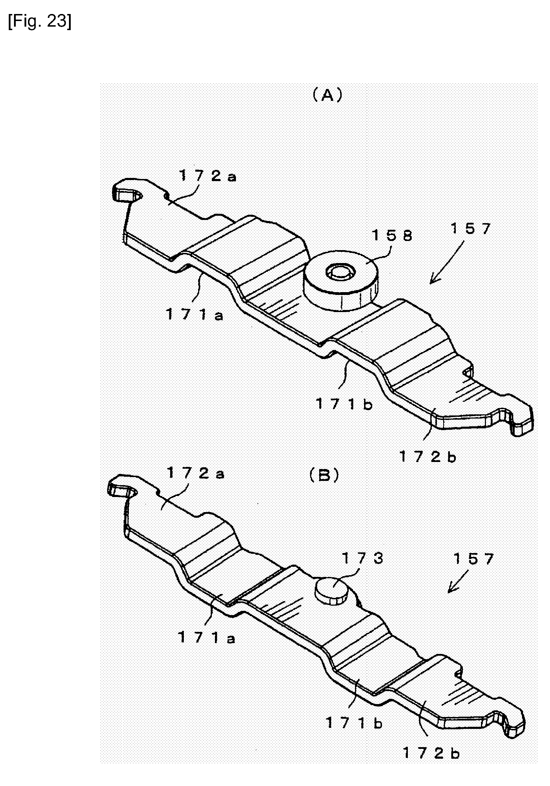

The center slide guiding portion 168 is used for slide-guiding the base 155 and the slider 157 in the center portions in the slide width direction, and as shown in Fig. 23(A), and shaft-supports a pressing roller 158 that is used for providing a smooth contact with the eccentric cam 161 so as to freely rotate thereon in the center on the upper face of the slider 157 in the slide width direction. Moreover, as shown in Fig. 23(B), the lower end of a roller shaft 173 that shift-supports the pressing roller 158 is allowed to stick out for slide-guiding in the center portion of the lower face of the slider 157 in the slide-width direction, when viewed with the slider 157 being upside down. The lower end of the roller shaft 173 is engaged with a slide guide groove 174 that forms a concave-fitting groove along the slide direction, prepared on the upper face of the base 155, so that the roller shaft 173 in the center of the slider 157 is utilized as the slide guide shaft so as to carry out a slide guiding process.

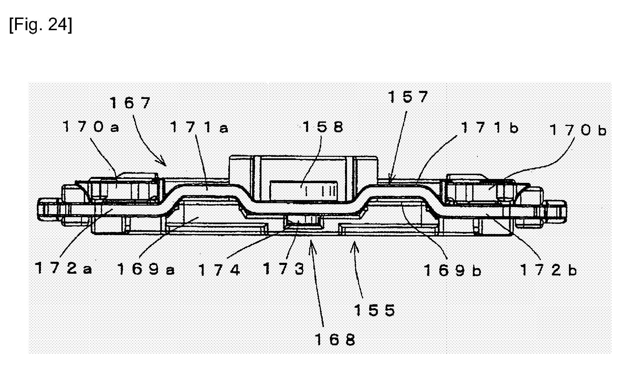

Therefore, by simultaneously using the slide guiding functions of the total three portions, that is, the slide guiding portion 168 in the center in addition to the tilt guiding portions 167 on the two side, the slider 157 is allowed to smoothly slide in the pressing direction as also shown in Figs. 22(B) and 24.
In particular, even when the contact portions between the slider 157 and the base 155 have worn off after a long-term use, since the contact state in the tilting direction is maintained so that it is possible to ensure a stable sliding operation without causing rattling upon sliding.

In the case when a mobile telephone 151 provided with the rotation support mechanism 152 having the above-mentioned structure is used, in the closed position with the main body 153 and the cover 154, as they are, being superposed on each other, the boss portions P1, P2, B1 and B2, which are made face to face with each other above and below the run-out stopping portion 166 are set in an abutted state so that the run-out preventive function is exerted by the boss portions P1, P2, B1 and B2, and the cover 154 is supported in a state free from the generation of even slight rattling.

Moreover, in the case when the cover 154 is operated to rotate from this closed position in the plane direction by 180 degrees to be opened, even if an applied force in the superposing direction is given, for example, to the shaft portion of the cover 154, during the opening operation or after the opening operation, the cover 154 is made free from unstable rattling by the boss-portion contacting function of the run-out stopping portion 166. Moreover, since the sliding function of the slider 157 that is allowed to slide upon rotation of the cover 154 is enhanced, it is possible to provide a stable open/close operation touch.

### Embodiment 4

The following description will discuss another embodiment of the boss portions that form the run-out stopping portion of the rotation support mechanism.

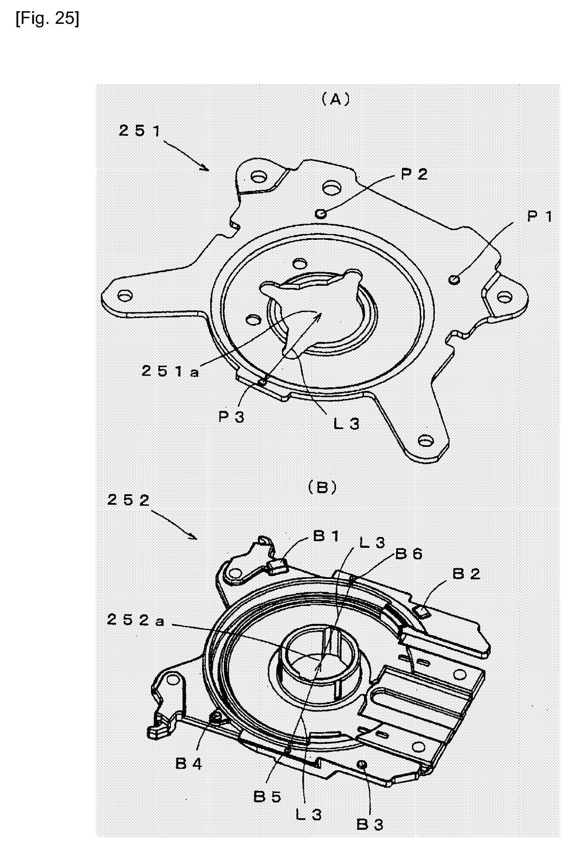

Fig. 25 shows a structure in which, in addition to the boss portions P1, P2 and B1 to B4 shown in Example 3, new boss portions B3, B5 and B6 are installed so as to further enhance the contact stability between the main body and the cover. Therefore, those members that are the same as those of embodiment 3 are indicated by the same reference numerals, and the description thereof is omitted.

On a plate 251 side shown in Fig. 25(A), in addition to the aforementioned boss portions P1 and P2, a third boss portion P3 is formed in the center position on the plate tip side centered on the shaft center 251 a so as to stick out therefrom. Therefore, on a base 252 side shown in Fig. 25(B) that relates to the third boss portion P3, in addition to the aforementioned boss portions B1 to B4, a fifth boss portion B5 is formed in the center position on the base tip side centered on the shaft center 252a corresponding to the cover close position so as to stick out therefrom. Moreover, a sixth boss portion B6 is formed in the center position on the base end side of the base corresponding to the cover open position so as to stick out therefrom.

In this case, the third boss portion P3 on the plate 251 side is made to have the shortest distance from the shaft center portion 251 a, and this distance is set to the shortest distance L3 that is different from the aforementioned first distance L1 and second distance L2. In the same manner, the spot positions of the fifth boss portion B5 and the sixth boss portion B6 on the base 252 side are made to have the shortest distance from the shaft center portion 252a, and this distance is set to the shortest distance L3 that is different from the aforementioned first distance L1 and second distance L2.

In this manner, by installing not only the boss portions P1, P2, B1, B2 and B6 on the base end side centered on the shaft center potions 251 a and 252a, but also the boss portions P3 and B3 to B5 on the tip side, it is possible to allow the boss portions to support the peripheral portion centered on the shaft center by using three supporting points, in the closed position of the cover as well as in the open position thereof; thus, it becomes possible to enhance the contact stabilizing function of the boss portions.

### Embodiment 5

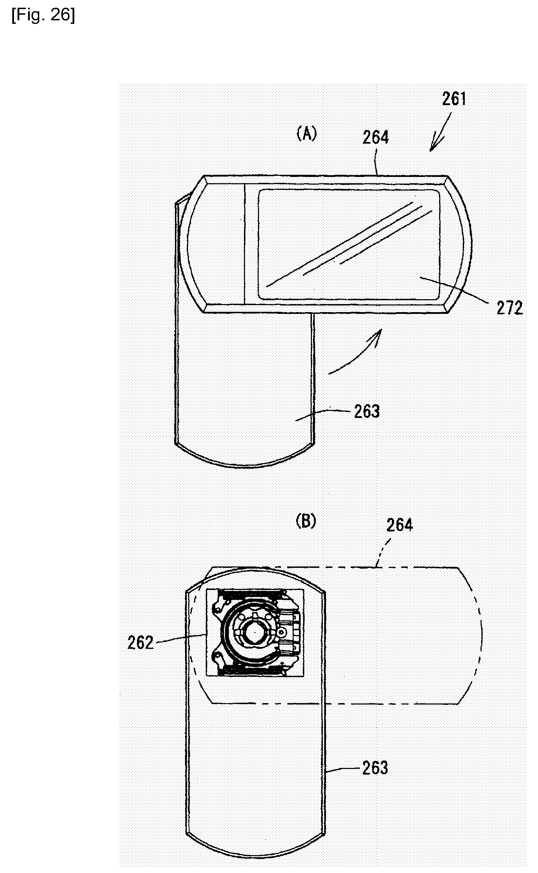

Figs. 26(A) and 26(B) show another embodiment of a rotation support mechanism 262 to be installed in a horizontal rotation type mobile telephone 261. The present embodiment defers from the rotation support mechanism 14 of the aforementioned embodiment 1 in that a longitudinally elongated cover 264 is used not only by rotating the longitudinally elongated cover to stop at the closed position (0 degree) and the open position (180 degrees) in the longitudinal positions, but also by rotating it to stop at a lateral position (90 degrees), based upon the reference position given by the longitudinally elongated main body 263. Since the other members have the same functions, the following description will discuss only the structures of the different portions.

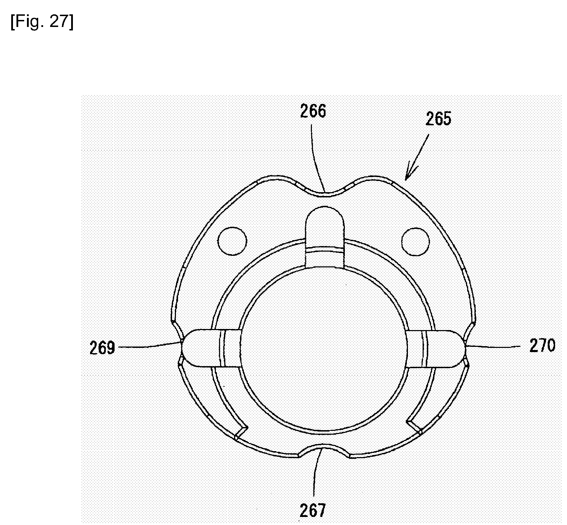

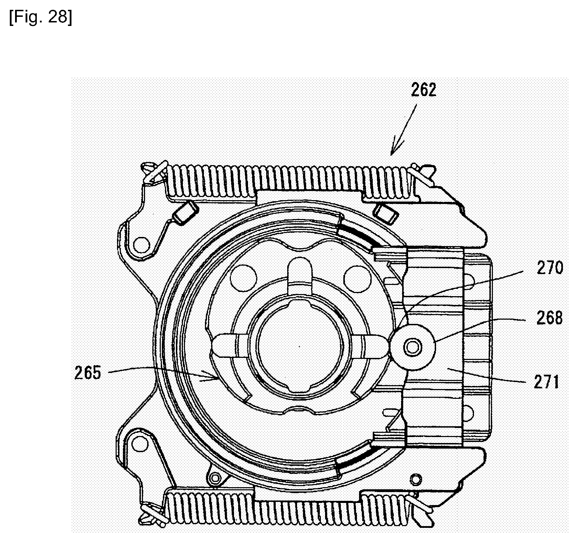

As shown in Fig. 27, in the rotation support mechanism 262, on a peripheral face of an eccentric cam 265 that is allowed to rotate from a close-related concave section 266 to an open-related concave section 267, formed on the peripheral face of the eccentric cam 265, by 180 degrees, as shown in Fig. 28, a left intermediate regulating concave section 269 and a right intermediate regulating concave section 270, which regulate the rotation of the eccentric cam 265 at an angle in the middle of the rotation, in concave/convex association with a portion of the pressing roller 268 that sticks out with an arc shape, are prepared as angle-regulating means.

In this case, the roller face of the pressing roller 268 is made in concave/concave-contact with either of the right and left intermediate regulating concave sections 269 and 270 of the eccentric cam 265, the pressing roller 268 is pressed integrally with the slider 271 in the pressing direction to advance or retreat so as to exert a pressing force toward the center of the eccentric cam 265. For this reason, upon receipt of this pressing force, the eccentric cam 265 is subjected to an increased rotation regulating force at the concave/convex contact position so that loads imposed on the intermediate regulating concave sections 269 and 270 in the two rotation directions are balanced with each other in a pressing-force balanced state. As a result, no rotating force is exerted on the eccentric cam 265 at the contact positions between the pressing roller 268 and the corresponding intermediate regulating concave sections 269 and 270.

Moreover, the cover 264, which is rotated in cooperation with the rotation of the eccentric cam 265, is allowed to rotate leftward (counter-clockwise direction) or rightward based on the reference position given by the longitudinally elongated main body 263. For this reason, as also shown in Fig. 26 and Fig. 28, when the cover 264 is rotated leftward by 90 degrees, the cover 264 and the eccentric cam 265 are allowed to rotate leftward by 90 degrees in the same manner, and at this time, the right intermediate regulating concave section 270 of the eccentric cam 265 and the pressing roller 268 are made in concave/convex contact with each other to be position-determined. As a result, the cover 264 is stopped in rotation in a lateral position with the cover 264 directed laterally to the right.

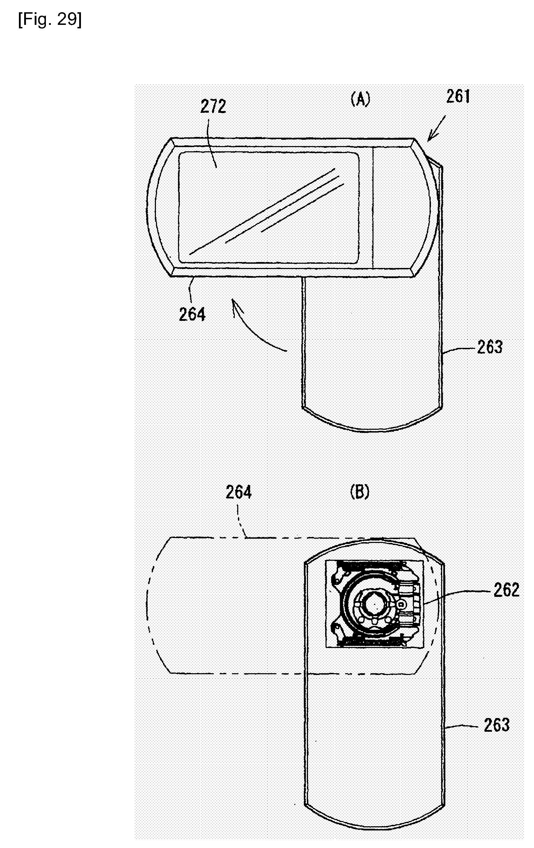

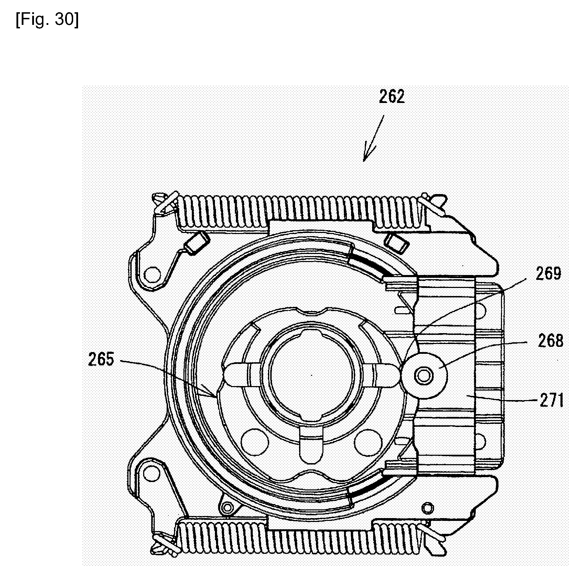

In contrast, when the cover 264 is rotated rightward by 90 degrees, as shown in Figs. 29(A) and 29(B) and Fig. 30, the cover 264 and the eccentric cam 265 are allowed to rotate rightward by 90 degrees in the same manner, and at this time, the left intermediate regulating concave section 269 of the eccentric cam 265 and the pressing roller 268 are made in concave/convex contact with each other to be position-determined. As a result, the cover 264 is rotation-stopped at a lateral position with the cover 264 directed laterally to the left.

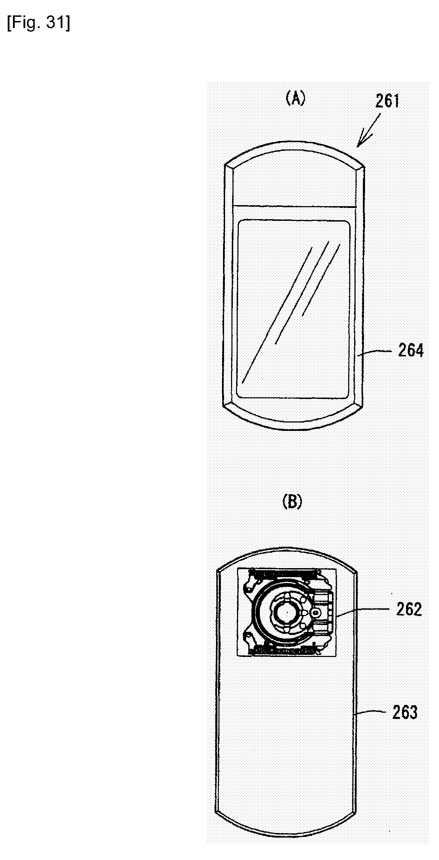

The following description will discuss opening and closing operations of the mobile telephone 261 having the rotation support mechanism 262 having the above-mentioned structure.
Normally, as shown in Figs. 31 (A) and 31 (B), in a stand-by state of the mobile telephone 11, it is in a closed state with the main body 263 and the cover 264 being closed and superposed on each other. When the side face of the closed cover 264 is pushed with a finger tip, for example, to rotate leftward, the concave/convex contact between the close-related concave section 266 of the eccentric cam 265 and the pressing roller 268 is made slightly offset to cause an offset in the mutual contact state in the closed position. For this reason, the eccentric cam 265 starts to rotate leftward energetically in a manner so as to avoid the pressing force of the pressing roller 268 that is pressing with a high load so that upon receipt of the pressing force of the pressing roller 268, the eccentric cam 265 is rotated by 90 degrees from the close-related concave section 266 to the right intermediate regulating concave section 270 at one time. At this time, as shown in Figs. 26 to 28, the right intermediate regulating concave section 270 and the pressing roller 268 are made in concave/convex contact with each other so that upon concave/convex contact with each other, the rotation is regulated, and stopped with the pressing forces being well balanced.

Moreover, the cover 264 that is integral with the eccentric cam 265 is allowed to rotate by 90 degrees so that the cover 264 is semi-automatically operated to open in a lateral position to the right at right-angles to the main body 263. Since this opening operation is symmetrically carried out laterally, the same opening operation is available also in the case of opening the cover 264 so as to stop in a lateral position to the left, as shown in Figs. 29(A) and 29(B) and Fig. 30.

Moreover, when the cover is stopped in the lateral position, the cover 264 on which a display device 272 is mounted is placed laterally. With this arrangement, the display 272 can be viewed in its laterally disposed state. In this case, since the main body 263 still remains in its longitudinally disposed state, it is easily carried by one hand so that, in particular, this structure is suitable for such a case as to watch television images for a long time.

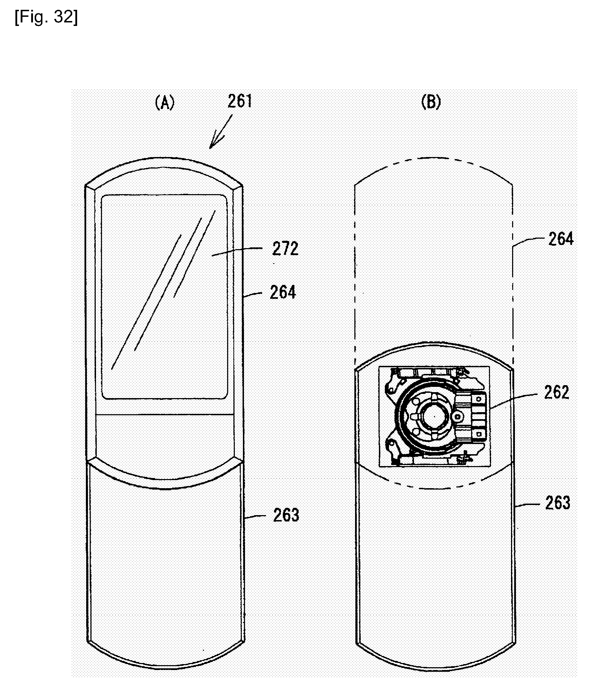

From this stopped state in the lateral position, when the cover 264 is further pushed upward by a finger tip so as to release the concave/convex contact state, the cover, which has received a pressing force from the pressing roller 268, is then rotated and stopped at the open position at 180 degrees, as shown in Figs. 32(A) and 32(B), so that the display device 272 can be viewed in the longitudinal position.

In contrast, in an attempt to return the cover 264 that is in the stopped state in the lateral position at right-angles to the main body 263 to the original closed position, the cover 264 is rotated with the hand by 90 degrees in the closing rotation direction to be placed in the original position.

In this manner, by manually giving to the cover 264 in the closed position a slight rotary force so as to initiate the rotation in the opening direction, it is then successively rotated automatically by 90 degrees to be opened. For this reason, the user can easily carry out the opening operation through a one-touch operation by simply touching the cover 264 with one hand slightly in the rotation direction, thereby making it possible to improve the opening operability of the mobile telephone 261.

### Embodiment 6

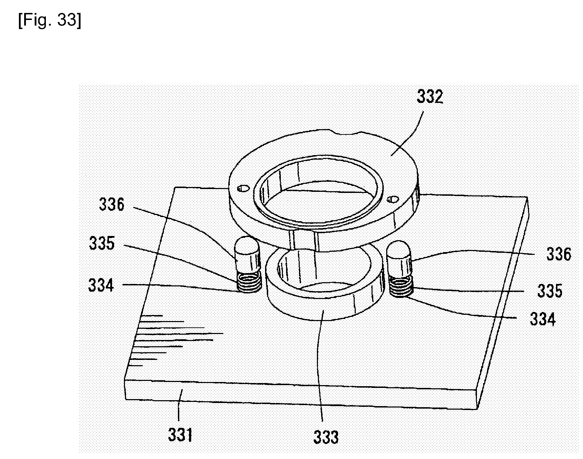

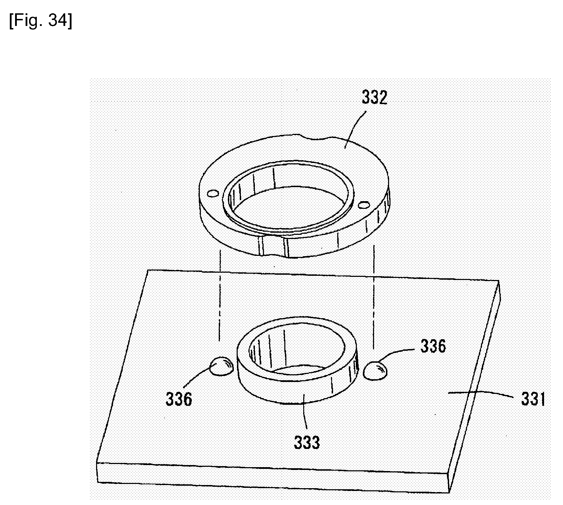

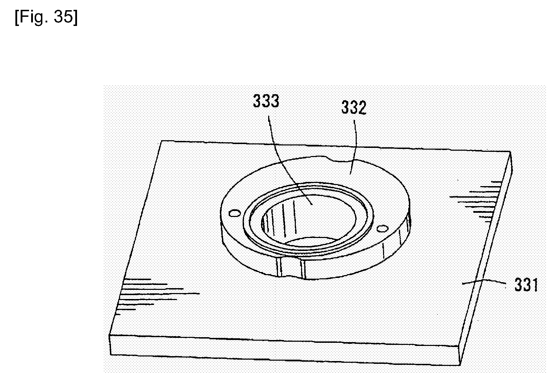

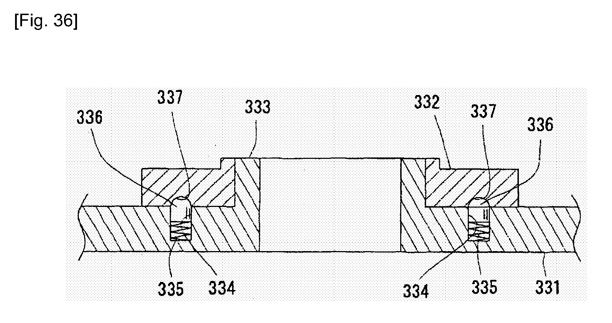

The following description will discuss another embodiment of the angle regulating mechanism to be used upon rotation-stopping the cover in the lateral position.
As shown in Figs. 33 to 36, this angle regulating means is formed between upper and lower opposing faces of the upper face of a base 331 and the lower face of an eccentric cam 332. Here, longitudinal holes 334 are formed in the upper face of the base 331 so as to make the upper face opened at symmetrical positions on the right and left sides centered on a shaft support cylinder 333, and a spring 335 and an elevating plunger 336 are successively inserted to each of these longitudinal holes 334 so that the upper plunger 336 is attached, with the lower spring 335 being made into a compressed state. With this arrangement, the top portion of the elevating plunger 336 is pressed upward so as to be pressed to come into contact with the lower face of the eccentric cam 332, which will be described later.

On the lower face of the eccentric cam 332, regulating concave sections 337 each of which is position-determined in association with the top portion of the elevating plunger 336 at a position with the eccentric cam 332 being located after making a 90-degree rotation from the closed state are formed. Since these regulating concave sections 337 are formed symmetrically on the right and left sides, a concave/convex contact can be made at a rotation position with 90 degrees to stop the rotation in both of the leftward rotation and the rightward rotation.

With respect to the concave/convex contact at this time, by changing factors, such as the depth and the width of the concave/convex shapes and the pressing force, the positioning precision and the operation touch at the time of open-operating the cover can be changed to desired values. With respect to the concave/convex contact, one of the eccentric cam and the elevating plunger may be prepared as the concave section, with the other being prepared as the convex portion, and even when the concave and convex states are reversed, the same functions and effects can be obtained. In this manner, not only the peripheral face of the eccentric cam, but also the lower face of the eccentric cam may be used as the concave/convex contact portion, and the corresponding angle regulating operation is obtained.

With respect to the correspondences between the structures of the present invention and the structures of above-mentioned embodiments, the following correspondences are listed:
The cam face of the invention corresponds to the peripheral face 19a of the embodiment; in the same manner,
the closed-position related portion corresponds to the close-related concave portion 31, 266;
the open-position related portion corresponds to the open-related concave section 32, 267;
the pressing means corresponds to each of the parallel spring 16a, 16b, the slider 17, 157, 271, the pressing roller 18, 143, 158, 268, the pressing spring 142 and the tilting lever 144;
the angle regulating means corresponds to each of the left intermediate regulating concave section 269 and the right intermediate regulating concave section 270 of the eccentric cam, the pressing roller 268, or the elevating plunger 336, and the regulating concave section 337; however, the present invention can be modified based upon technical ideas indicated by claims, and is not limited only by the arrangements of the aforementioned embodiments.

For example, in the above-mentioned embodiments, the base 15 of the rotation support mechanism 14 is attached to the main body 12, and the plate 22 is attached to the cover 13; however, the base 15 may be attached to the cover 13, and the plate 22 may be attached to the main body 12 so that these members may be attached in a reversed manner. Moreover, in the aforementioned embodiments, the eccentric cam 19 having a laterally symmetric shape; however, not limited to this shape, the shape of the eccentric cam may be formed into a laterally asymmetric shape, or the surface resistances of the right and left peripheral surface portions of the eccentric cam may be made different from each other so that upon opening operation, the speeds of the leftward rotation and the rightward rotation may be made different from each other.

Moreover, each of the pressing rollers 18, 143 and 158 is arranged to apply a spring pressing force to each of the eccentric cams 19 and 161 through each of the sliders 17, 157 and 271 and the tilting lever 144; however, the sliders 17, 157 and 271 and the tilting lever 144 may be omitted to reduce the number of parts so as to directly apply the pressing force of the spring to each of the pressing rollers, 18, 143 and 158. Moreover, each of the rotation discs 20 and 162 and each of the plates 22 and 163 may be preliminarily prepared as the same part, and in this case, one of the parts can be omitted.

Moreover, with respect to the intermediate regulating concave sections 269 and 270 formed on the peripheral face of the eccentric cam 265, an example in which the cover 264 is placed at a position where it is rotated by 90 degrees from the closed position is given; however, not limited to this structure, it may be placed with a desired angle suitable for applications of the mobile telephone.

### INDUSTRIAL APPLICABILITY

Not limited to the mobile telephone, the rotation supporting mechanism and the mobile terminal in accordance with the present invention may be applied to an open/close supporting portion for a mobile terminal such as an electronic notebook.

## Claims

1. A rotation support mechanism, which allows a cover to rotate in a plane direction from a closed position with a longitudinally elongated main body and the cover being superposed on each other in the superposed state as it is and also allows the cover to be stopped at an open position with a certain rotated angle, comprising:
an eccentric cam that rotates in the plane direction in an eccentric manner, and has a closed-position-related portion formed at the maximum eccentric rotation position on one of the cam faces that has been rotated to have an orientation different by 180 degrees, and an open-position related portion formed at the minimum eccentric rotation position on the other cam face;
pressing means that presses the cam face of the eccentric cam by setting a pressing direction in the same direction as a direction formed by connecting the two positions of the closed-position-related portion and the open-position-related portion that have different orientations by 180 degrees through the shaft center of the eccentric cam, and, upon coming into contact with the closed-position-related portion on the cam face, increases the pressing load and the rotation regulating force to the eccentric cam so as to stop the rotation operation of the eccentric cam so that the pressing load to the eccentric cam is lowered as coming closer to the open-position-related portion, while, upon coming into contact with the open-position-related portion on the cam face, the pressing means increases the rotation regulating force to stop the rotation operation of the eccentric cam; and
angle regulating means that stops the rotation of the eccentric cam at a certain angle regulation position in the middle of the rotation of the eccentric cam in an eccentric manner,
wherein: one of the eccentric cam and the pressing means is attached to the main body, and the other is attached to the cover so as to rotation-support the cover so that the cover is allowed to stop the rotation at the closed position, the open position and the angle regulation position.

2. The rotation support mechanism according to claim 1, wherein the angle regulating means is provided with at least one intermediate regulating concave section that is made in concave/convex contact with the pressing means to regulate the rotation of the eccentric cam in the middle of the rotation, on the cam face that allows the eccentric cam to rotate by 180 degrees from the closed-position-related portion to the open-position-related portion.

3. The rotation support mechanism according to claim 1 or 2, wherein the intermediate regulating concave section is formed in the middle position of the rotation on the cam face of the eccentric cam, with the eccentric cam being located after making a 90-degree rotation from the closed-position-related portion.

4. A mobile terminal in which the rotation support mechanism according to any of claims 1 to 3 is utilized.
